(19) 

Europäisches
Patentamt
European
Patent Office
Office européen
des brevets

(11) **EP 4 390 461 A1**

(12) **EUROPEAN PATENT APPLICATION**
published in accordance with Art. 153(4) EPC

(43) Date of publication:
**26.06.2024 Bulletin 2024/26**

(21) Application number: **22928296.7**

(22) Date of filing: **17.11.2022**

(51) International Patent Classification (IPC):
**G01S 19/42** (2010.01)     **G01S 19/43** (2010.01)

(52) Cooperative Patent Classification (CPC):
**G01S 19/42; G01S 19/43**

(86) International application number:
**PCT/CN2022/132455**

(87) International publication number:
**WO 2023/160036 (31.08.2023 Gazette 2023/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.02.2022 CN 202210175779**

(71) Applicant: **Tencent Technology (Shenzhen)
Company Limited
Shenzhen, Guangdong, 518057 (CN)**

(72) Inventor: **GAO, Xingwei
Shenzhen, Guangdong 518057 (CN)**

(74) Representative: **Sadler, Peter Frederick
Reddie & Grose LLP
The White Chapel Building
10 Whitechapel High Street
London E1 8QS (GB)**

(54) **POSITIONING METHOD AND APPARATUS, AND DEVICE AND STORAGE MEDIUM**

(57)     A data processing method and apparatus, and a device (1000) and a storage medium, which are mainly applied to the field of electronic maps. The method comprises: acquiring first actual observation data (22, 32, 42), second actual observation data (24), the actual position of a target reference station (11, 23) and the actual positions (33, 43) of N satellites (S101, S201); determining an initially estimated position (26, 35, 45) of a terminal (21, 31, 41, 71) according to the first actual observation data (22, 32, 42) and the actual positions (33, 43) of the N satellites (S102, S202); according to the second observation data (24), the actual position of the target reference station (11, 23) and the actual positions (33, 43) of the N satellites, determining a first system positioning error (27) corresponding to the initially estimated position (26, 35, 45) of the terminal (21, 31, 41, 71) (S103, S203); and adjusting the initially estimated position (26, 35, 45) of the terminal (21, 31, 41, 71) according to the first system positioning error and the first actual observation data (22, 32, 42), so as to obtain a target position (28) of the terminal (21, 31, 41, 71) (S104). Therefore, the position positioning accuracy of the terminal (21, 31, 41, 71) can be improved.

FIG. 3

**Description**

This application claims priority to Chinese Patent Application No. 2022101757795, entitled "DATA PROCESSING METHOD, APPARATUS, AND DEVICE, AND STORAGE MEDIUM" filed with the China National Intellectual Property Administration on February 24, 2022.

FIELD OF THE TECHNOLOGY

The present disclosure relates to the field of intelligent transportation technologies, and in particular, to positioning technologies.

BACKGROUND OF THE DISCLOSURE

A global navigation satellite system (GNSS) has developed a powerful application of global spatial positioning. A terminal may be positioned by using the global navigation satellite system, and a corresponding service (for example, a path planning service, a taxi hailing service, or recommending a nearby restaurant or hotel for a user) may be provided for a user who uses the terminal based on positioning information of the terminal.

However, limited by a systematic error of positioning (such as an ionospheric error or a tropospheric error) corresponding to the terminal, comprehensive application of satellite navigation and positioning is hindered to some extent. In a process of positioning the terminal by using the global navigation satellite system, a case in which a positioning location of the terminal deviates from a real position of the terminal easily occurs. Consequently, positioning accuracy of the terminal is relatively low.

SUMMARY

Embodiments of the present disclosure provide a method and an apparatus for positioning, a device, and a storage medium, which improve positioning accuracy of a terminal.

One aspect of the embodiments of the present disclosure provides a method for positioning, executable by a computer device. The method includes: obtaining first actual observations, second actual observations, a real position of a target base station, and real positions of N satellites, wherein the first actual observations are observations generated through a terminal communicating with the N satellites, respectively, the second actual observations are generated through the target base station communicating with the N satellites, respectively, the terminal is associated with the target base station, and N is an integer greater than 1; determining an initially estimated position of the terminal based on the first actual observations and the real positions of the N satellites; determining a first systematic error of positioning, for the initially estimated position of the terminal, based on the second actual observations, the real position of the target base station, and the real positions of the N satellites; and modifying the initially estimated position of the terminal according to the first systematic error and the first actual observations to obtain a target position of the terminal.

Another aspect of the embodiments of the present disclosure provides an apparatus for positioning. The apparatus comprises: an obtaining module, configured to obtain first actual observations, second actual observations, a real position of a target base station, and real positions of N satellites, wherein the first actual observations are observations generated through a terminal communicating with the N satellites, respectively, the second actual observations are generated through the target base station communicating with the N satellites, respectively, the terminal is associated with the target base station, and N is an integer greater than 1; a determining module, configured to determine an initially estimated position of the terminal based on the first actual observations and the real positions of the N satellites, and determine a first systematic error of positioning, for the initially estimated position of the terminal, based on the second actual observations, the real position of the target base station, and the real positions of the N satellites; and an adjustment module, configured to modify the initially estimated position of the terminal according to the first systematic error and the first actual observations to obtain a target position of the terminal.

An aspect of the embodiments of the present disclosure provides a computer device, including: a processor and a memory, the processor being connected to the memory, the memory being configured to store program code, and the processor being configured to invoke the program code to perform the foregoing method.

An aspect of the embodiments of the present disclosure provides a computer readable storage medium. The computer readable storage medium stores a computer program. The computer program includes program instructions. When the program instructions are executed by a processor, the foregoing method is performed.

An aspect of the embodiments of the present disclosure provides a computer program product, including a computer program or computer instructions. When the computer program or computer instructions are executed by a processor, the foregoing method is implemented.

According to embodiments of the present disclosure, the first actual observations, the second actual observations, the real position of the target base station, and the real positions of the N satellites are obtained. The initially estimated position of the terminal is determined based on the first actual observations and the real positions of the N satellites. The initially estimated position of the terminal is a position determined without considering a systematic error during the positioning. That is, the initially estimated position of the terminal is somewhat inaccurate. Thereby, the computer device may determine the first systematic error for the initially estimated position based on the second actual observations, the real positions of the N satellites, and the real position of the target base station. The first systematic error is capable to reflect a degree of accuracy of the initially estimated position. Then, the initially estimated position of the terminal can be modified according to the first systematic error and the first actual observations, so as to obtain the target position of the terminal. Accordingly, the terminal can be more accurately positioned. The positioning can be implemented with high precision.

BRIEF DESCRIPTION OF THE DRAWINGS

FIG. 1 is a schematic architectural diagram of a positioning system according to an embodiment of the present disclosure.

FIG. 2 is a schematic diagram of an interaction scenario between devices in a positioning system according to an embodiment of the present disclosure.

FIG. 3 is a schematic flowchart of a method for positioning according to an embodiment of the present disclosure.

FIG. 4 is a schematic diagram of a scenario of obtaining an initially estimated position of a terminal according to an embodiment of the present disclosure.

FIG. 5 is a schematic diagram of a scenario of obtaining an initially estimated position of a terminal according to an embodiment of the present disclosure.

FIG. 6 is a schematic flowchart of a method for positioning according to an embodiment of the present disclosure.

FIG. 7 is a schematic diagram of a scenario in which differential processing is performed on virtual observations and first actual observations according to an embodiment of the present disclosure.

FIG. 8 is a schematic diagram of a scenario in which an identifier of a vehicle corresponding to a terminal and an identifier of a vehicle corresponding to a neighboring terminal are added onto an electronic map according to an embodiment of the present disclosure.

FIG. 9 is a schematic structural diagram of an apparatus for positioning according to an embodiment of the present disclosure.

FIG. 10 is a schematic structural diagram of a computer device according to an embodiment of the present disclosure.

DESCRIPTION OF EMBODIMENTS

The technical solutions in embodiments of the present disclosure are clearly and completely described in the following with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without making creative efforts shall fall within the protection scope of the present disclosure.

Before the embodiments of the present disclosure are further described in detail, a description is made on nouns and terms in the embodiments of the present disclosure, and the nouns and terms in the embodiments of the present disclosure are applicable to the following explanations.

Location based service (LBS): The LBS is a location-related service provided by a wireless operator company for users. The LBS obtains a current location of a positioning device by using various types of positioning technologies, and provides an information resource and a basic service for the positioning device by using the mobile Internet. The LBS integrates a plurality of information technologies such as mobile communication, an interconnected network, spatial positioning, location information, and big data, and uses a mobile interconnected network service platform to update and exchange data, so that a user can obtain a corresponding service by means of spatial positioning.

Global navigation satellite system (GNSS): The global navigation satellite system is also referred to as a global satellite navigation system. The global navigation satellite system is an air-based radio navigation positioning system that can provide three-dimensional coordinates, a speed, and time information all the time for a user at a surface of the earth or anywhere in near-earth space. Common global navigation satellite systems include four major navigation satellite systems: the Global Positioning System (GPS), the BeiDou Navigation Satellite System (BDS), the GLONASS Satellite Navigation System (GLONASS), and the European Union Galileo Positioning System (GALILEO). The American GPS appeared first. At present, the most perfect technology is also the GPS system. With the launch of the BDS and GLONASS systems in the Asia-Pacific region in recent years, the BDS system has developed more and more rapidly in the civil field. Satellite navigation systems have been used extensively in communication, consumer entertainment, mapping, time serving, vehicle management, and vehicle navigation and information services, with a general trend towards providing high-precision services for real-time applications.

Base station: The precision of satellite positioning is mainly restricted by various errors related to positioning, such as atmospheric delay errors such as ionospheric and tropospheric, satellite orbit errors and clock differences, multipath effects, relativistic effects, various hardware delays, and observation noise. To eliminate or weaken various errors that restrict a positioning precision of a terminal, a most reliable and effective method is to establish a GNSS base station (or referred to as a reference station) near the terminal. The base station is generally configured with a GPS receiver, a data transmission device, a meteorological device, and the like. Because the base station is fixed and continuously runs for a long time for observation, coordinates of the base station can be accurately measured. In this way, a positioning error at the base station is obtained by processing observation of the base station.

Electronic map: The electronic map may be a high-precision map that serves an automatic driving system. The high-precision map is also referred to as an automatic driving map and a high-resolution map, and is a new map data paradigm for the automatic driving vehicle. An absolute location precision of the high-precision map is close to 1 m, and a relative location precision is at a centimeter level, and can reach 10-20 cm. A road feature (for example, a lane line feature) is accurately and comprehensively represented, and higher real-time performance is required. This is the most prominent feature of the high-precision map. In addition, the high-precision map may further record specific details of a driving behavior, including a typical driving behavior, an optimal acceleration point and brake point, road condition complexity, labeling of signal receiving of different road sections, and the like.

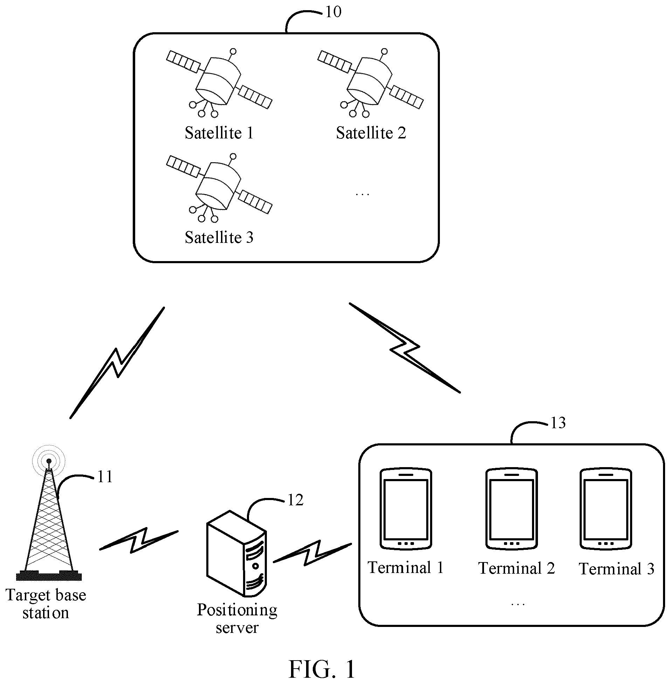

To facilitate clearer understanding of the present disclosure, a positioning system applied to a method for positioning in the present disclosure is first described. As shown in FIG. 1, the positioning system includes a satellite cluster 10, a target base station 11, a positioning server 12, and a terminal cluster 13. The satellite cluster 10 may include one or more satellites, and a quantity of satellites is not limited herein. As shown in FIG. 1, the satellite cluster may specifically include a satellite 1, a satellite 2, a satellite 3, .... It may be understood that all satellites in the satellite cluster 10 may be connected to the base station 11 through a network, so that each satellite can exchange data with the base station 11 through the network connection. Similarly, as shown in FIG. 1, the terminal cluster 13 may include one or more terminals, and the terminal cluster 13 may specifically include a terminal 1, a terminal 2, a terminal 3, .... It may be understood that all terminals in the terminal cluster 13 may be connected to the satellite in the satellite cluster 10 through a network, so that each terminal can exchange data with each satellite by using the network connection. The positioning server 12 is connected to both the target base station 11 and the terminal in the terminal cluster 13 through a network, so that the positioning server 12 can exchange data with the target base station 11 and each terminal by using the network connection.

The terminal 1 is used as an example. The terminal 1 may be referred to as a mobile terminal, that is, a computer device that can be used during movement. The terminal 1 may be understood as an integrated information processing platform, and has extremely rich communication manners. For example, communication may be performed by using a wireless operation network such as a global system for mobile communication (GSM), code division multiple access (CDMA), wideband code division multiple access (WCDMA), an enhanced data rate for GSM evolution (EDGE), a fourth generation communication technology (4G), and a fifth generation communication technology (5G), or communication may be performed by using a wireless local area network (Wireless Fidelity, Wi-Fi), Bluetooth, and an infrared ray. In addition, a global navigation satellite system (GNSS) positioning chip is integrated into the terminal 1. The GNSS positioning chip (for example, a high-precision GNSS receiver) may be configured to communicate with the satellite in the satellite cluster 10, to obtain a first actual observation, and send the first actual observation to the positioning server 12. The first actual observation includes at least one of an actual pseudo-range observation and an actual carrier-phase observation between the terminal 1 and the satellite in the satellite cluster 10. Herein the actual pseudo-range observation herein is configured reflect a geometric distance observation between the terminal 1 and the satellite in the satellite cluster 10. The actual carrier-phase observation is configured to a phase difference between a carrier or a subcarrier, which is transmitted from the satellite in the satellite cluster 10, and a local oscillator signal of the terminal 1. The local oscillator signal of the terminal 1 refers to another carrier generated by the terminal 1.

A GNSS positioning chip is integrated into the target base station 11. The GNSS positioning chip (for example, a high-precision GNSS receiver) may be configured to communicate with the satellite in the satellite cluster 10 to obtain a second actual observation, and send the second actual observation to the positioning server 12. The second actual observation includes at least one of an actual pseudo-range observation and an actual carrier-phase observation between the target base station 1 and the satellite in the satellite cluster 10. The actual pseudo-range observation herein is configured to reflect a geometric distance observation between the target base station 11 and the satellite in the satellite cluster 10. The actual carrier-phase observation is configured to reflect a phase difference between a carrier or a subcarrier, which is transmitted by the satellite in the satellite cluster 10, and a local oscillator signal of the target base station 11. The local oscillator signal of the target base station 11 refers to another carrier generated by the target base station 11. Herein the target base station 11 is associated with the terminal in the terminal cluster 13. Taking a terminal 1 as an example, the target base station 11 associated with the terminal 1 may be a base station from which a distance of the terminal 1 is less than a distance threshold. Alternatively, the target base station 11 may refer to a base station which is capable to communicate with the satellite in the satellite cluster 10. That is, the satellite cluster communicating with the terminal is the same as that communicating with the target base station.

The positioning server 12 may be configured to perform high-precision positioning on the terminal 1 based on the first actual observation(s), the second actual observation(s), real position(s) of the satellite(s) in the satellite cluster 10, and a real position of the target base station 11, to obtain a target position of the terminal 1.

The positioning server 12 may be an independent physical server, or may be a server cluster or a distributed system formed by at least two physical servers, or may be a cloud server that provides a basic cloud computing service such as a cloud service, a cloud database, cloud computing, a cloud function, cloud storage, a network service, cloud communication, a middleware service, a domain name service, a security service, a content delivery network (CDN), big data, and an artificial intelligence platform. The terminal in the terminal cluster 13 may be specifically an in-vehicle terminal, a smartphone, a tablet computer, a notebook computer, a desktop computer, a smart sound box, a screen sound box, a smartwatch, or the like, but is not limited thereto. Each terminal may be directly or indirectly connected to the server in a wired or wireless communication manner. In addition, a quantity of terminals and a quantity of servers may be one or at least two. This is not limited in the present disclosure.

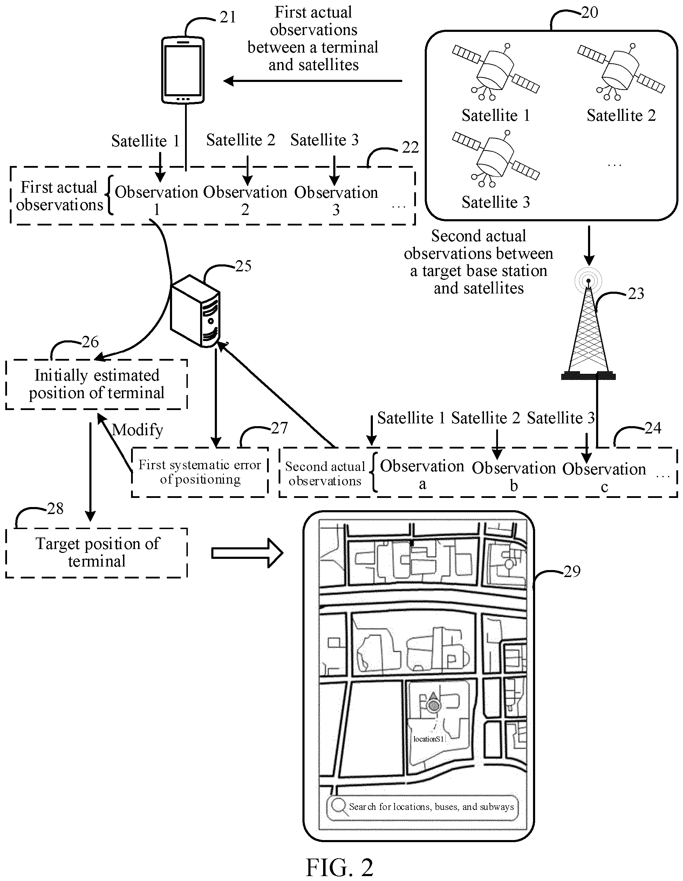

Referring to FIG. 2, FIG. 2 is a schematic diagram of a positioning scenario according to an embodiment of the present disclosure. An electronic map application scenario is used as an example to describe a positioning process. As shown in FIG. 2, a satellite cluster 20 may be the satellite cluster 10 in FIG. 1, a terminal 21 may be any terminal in the terminal cluster 13 in FIG. 1, a target base station 23 may be the target base station 11 in FIG. 1, and a positioning server 25 may be the positioning server 12 in FIG. 1.

An electronic map application is installed in the terminal 21. When a user of the terminal 21 wants to query a location, the electronic map application in the terminal 21 may be started. The terminal 21 responds to a start operation for the electronic map application, and displays a home page of the electronic map application on a screen of the terminal 21. Permission prompt information may be displayed on the home page of the electronic map application. The permission prompt is used for prompting the user that the user is currently obtaining the location of the terminal 21. After obtaining a confirmation operation sent by the user for the permission prompt, the terminal 21 may obtain first actual observation(s) generated through communication between the terminal 21 and satellite(s) in the satellite cluster 20, and send the first actual observation(s) to the positioning server 25.

Each first actual observation includes at least one of an actual pseudo-range observation and an actual carrier-phase observation. It is assumed that the satellite cluster 20 includes N satellites, which are respectively a satellite 1, a satellite 2, a satellite 3, ..., and a satellite N. In this case, the first actual observation generated through communication between the terminal 21 and the satellite 1 may be referred to as observation 1, the first actual observation generated through communication between the terminal 21 and the satellite 2 may be referred to as observation 2, the first actual observation generated through communication between the terminal 21 and the satellite 3 may be referred to as observation 3, ..., and the first actual observation generated through communication between the terminal 21 and the satellite N may be referred to as observation N. The first actual observations generated through communication between the terminal 21 and the N satellites may form a sequence 22 as shown in in FIG. 2.

Similarly, the target base station 23 may obtain second actual observation(s) generate through the target base station 23 communicating with satellite(s) in the satellite cluster 20, and send the second actual observation(s) and a real position of the target base station 23 to the positioning server 25. Herein each second actual observation includes at least one of an actual pseudo-range observation and an actual carrier-phase observation. It is assumed that the satellite cluster 20 includes N satellites, which are respectively a satellite 1, a satellite 2, a satellite 3, ..., and a satellite N. In this case, the second actual observation generated through communication between the target base station 23 and the satellite 1 may be referred to as observation a, the second actual observation (s) communication between the target base station 23 and the satellite 2 may be referred to as observation b, the second actual observation (s) communication between the target base station 23 and the satellite 3 may be referred to as observation c, ..., and the second actual observation obtained by communication between the target base station 23 and the satellite N may be referred to as observation n. The second actual observations (s) communication between the target base station 23 and the N satellites may form a sequence 24 as shown in in FIG. 2.

After obtaining the first actual observations, the second actual observations, and the real position of the target base station, the positioning server 25 may determine an initially estimated position 26 of the terminal 21 based on the first actual observation and real positions of the N satellites. The initially estimated position 26 is a position determined without considering a systematic error during the positioning, and generally there is a large error between the initially estimated position 26 and a real position of the terminal 21. Further, the positioning server 25 may obtain a real position of each satellite in the satellite cluster, and determine a first systematic error 27 of positioning for the initially estimated position 26 of the terminal based on the real position of each satellite, the real position of the target base station, and the second actual observations. The first systematic error 27 is configured to reflect a degree of inaccuracy of the initially estimated position 26 of the terminal. A larger first systematic error 27 indicates lower accuracy of the initially estimated position 26 of the terminal. On the contrary, a smaller first systematic error 27 indicates higher accuracy of the initially estimated position 26 of the terminal.

Further, the positioning server 25 may modify the initially estimated position 26 of the terminal according to the first systematic error 27 of positioning and the first actual observations, so as to obtain a target position 28 of the terminal, and send the target position 28 of the terminal to the terminal 21. The terminal 21 may use the target position 28 of the terminal as the real position of the terminal 21, and mark the target position 28 of the terminal on an electronic map 29 of the electronic map application. As shown in FIG. 2, the target position 28 of the terminal 21 is marked as a location S1. Further, the terminal 21 may perform an operation, such as path planning, according to the location S1. Modifying the initially estimated position of the terminal according to the first systematic error of positioning and the first actual observations can improve accuracy of positioning the terminal. Positioning can be implemented with high precision.

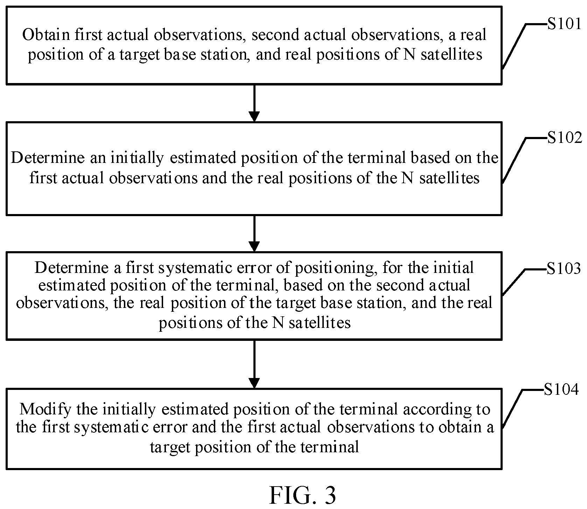

Further, FIG. 3 is a schematic flowchart of a method for positioning according to an embodiment of the present disclosure. As shown in FIG. 3, the method may be performed by the terminal in FIG. 1, or may be performed by the positioning server in FIG. 1, or may be jointly performed by the terminal and the positioning server in FIG. 1. Devices configured to perform the method in the present disclosure may be collectively referred to as a computer device. The method for positioning may include the following steps S101 to S104.

S101. Obtain first actual observations, second actual observations, a real position of a target base station, and real positions of N satellites, wherein the first actual observations are observations generated through a terminal communicating with the N satellites, respectively, the second actual observations are generated through the target base station communicating with the N satellites, respectively, the terminal is associated with the target base station, and N is an integer greater than 1.

Herein the computer device may obtain the first actual observations, the second actual observations, the real position of the target base station, and the real positions of the N satellites. The real position of the target base station is an exact location of the target base station. The real position of the target base station is determined when the target base station has been established. The real position of the target base station may be manually inputted and may be subject to multiple manual confirmations. The real position of the satellite refers to a real-time position of the satellite. The real position of the satellite may be determined according to a satellite ephemeris transmitted from the satellite. The satellite ephemeris includes an expression for describing a position and a speed of the satellite. That is, the satellite ephemeris may describe an accurate position with respect to time or an orbit table. It is appreciated that the satellite ephemeris may be a function with respect to time.

Satellite communication between the terminal and the satellite may be unidirectional. To be specific, the terminal may receive a first satellite ephemeris from the satellites, and determine the first actual observations between the terminal and the N satellites based on the first satellite ephemeris. Alternatively, the terminal may receive the first actual observations from the satellites. Similarly, satellite communication between the target base station and the satellite may be unidirectional. To be specific, the target base station may receive a second satellite ephemeris from the satellites, and determine the second actual observations between the target base station and the N satellites based on the second satellite ephemeris. Alternatively, the target base station may receive the second actual observations from the satellites.

S102. Determine an initially estimated position of the terminal based on the first actual observations and the real positions of the N satellites.

Herein the computer device may determine the initially estimated position of the terminal based on the first actual observations. The initially estimated position of the terminal may be obtained without considering a systematic error of positioning. Specifically, the computer device may determine the initially estimated position of the terminal in any one or a combination of the following three manners.

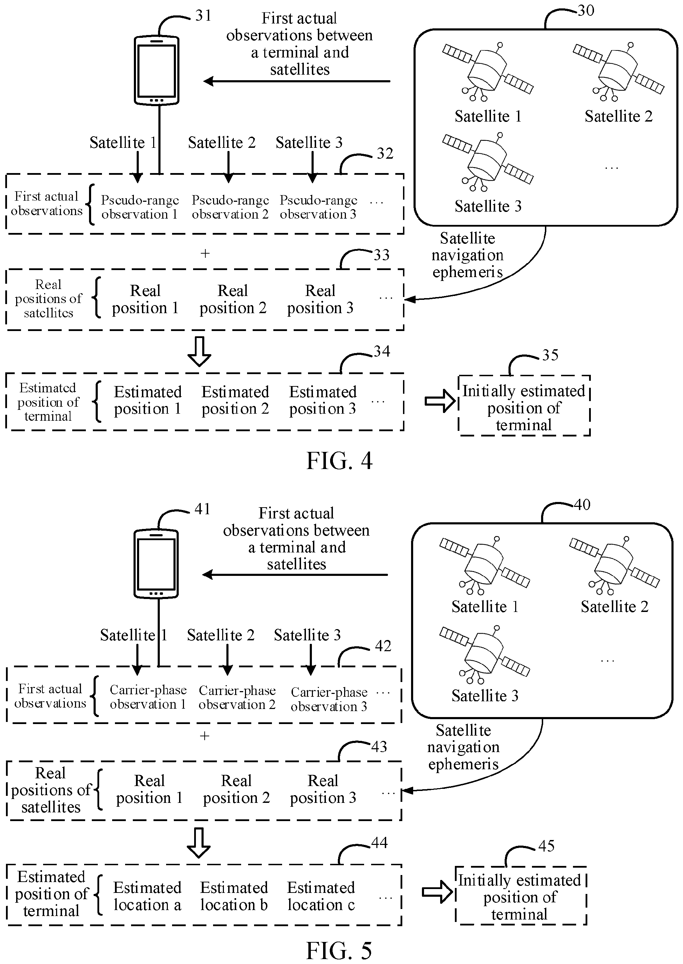

Manner 1: As shown in FIG. 4, a satellite cluster 30 may be the satellite cluster 10 as shown in FIG. 1, and a terminal 31 may be an arbitrary terminal in the terminal cluster 13 as shown in FIG. 1. The terminal 31 may obtain the first actual observations through communicating with satellites in the satellite cluster 30, where each first actual observation includes an actual pseudo-range observation. It is assumed that there are N satellites in the satellite cluster 30, which are satellite 1, satellite 2, satellite 3, ..., and satellite N, respectively. In FIG. 4, the actual pseudo-range observation between the terminal 31 and the satellite 1 is pseudo-range observation 1, the actual pseudo-range observation between the terminal 31 and the satellite 2 is pseudo-range observation 2, the actual pseudo-range observation between the terminal 31 and the satellite 3 is pseudo-range observation 3, ..., and the actual pseudo-range observation between the terminal 31 and the satellite N is pseudo-range observation N. Therefore, the actual pseudo-range observations between the terminal 31 and the N satellites form a sequence 32 as shown in FIG. 4. Further, the computer device may obtain satellite ephemeris sent by the N satellites, respectively, and determine the real positions of the N satellites based on the satellite ephemeris. The real positions of the N satellites form a sequence 33 as shown in FIG. 4. That is, the real position of the satellite 1 is real position 1, the real position of the satellite 2 is real position 2, the real position of the satellite 3 is real position 3, ..., and the real position of the satellite N is real position N. Then, the computer device may determine the initially estimated position of the terminal based on the pseudo-range observations and the real positions of the satellites. Specifically, estimated position 1 of the terminal is determined according to pseudo-range observation 1 and real position 1, estimated position 2 of the terminal is determined according to pseudo-range observation 2 and real position 2, estimated position 3 of the terminal is determined according to pseudo-range observation 3 and real position 3, ..., and estimated position N of the terminal is determined according to pseudo-range observation N and real position N. Thereby, the estimated positions of the terminal form a sequence 34 as shown in FIG. 4. Further, the initially estimated position 35 of the terminal may be determined according to estimated position 1, estimated position 2, estimated position 3, ..., and estimated position N. Thereby, the initially estimated position of the terminal is determined according to the actual pseudo-range observations between the terminal and the N satellites, so that efficiency and real-time performance of obtaining the initially estimated position of the terminal can be improved.

Determining estimated position i of the terminal according to pseudo-range observation i and real position i may be as follows. Estimated position i of the terminal may be determined through subtracting pseudo-range observation i from real position i, where i is a positive integer less than or equal to N. Determining the initially estimated position of the terminal according to estimated position 1, estimated position 2, estimated position 3, ..., and estimated position N may be as follows. One estimated position may be randomly selected from estimated position 1, estimated position 2, the estimated positions 3, ..., and estimated position N, as the initially estimated position of the terminal. Alternatively, an average position among estimated position 1, estimated position 2, estimated position 3, ..., and estimated position N serves as the initially estimated position of the terminal. Alternatively, the computer device may obtain first differences between a first target estimated position and first remaining estimated positions, respectively, calculate a sum of the first differences, and determine the estimated position which has the smallest sum of the first differences as the initially estimated position of the terminal. The first target estimated position refers to each of estimated position 1, estimated position 2, estimated position 3, ..., and estimated position N. The first remaining estimated positions refer to the estimated positions other than the first target estimated position among estimated position 1, estimated position 2, estimated position 3, ..., and estimated position N.

Manner 2: As shown in FIG. 5, a satellite cluster 40 may be the satellite cluster 10 as shown in FIG. 1, and a terminal 41 may be an arbitrary terminal in the terminal cluster 13 as shown in FIG. 1. The terminal 41 may obtain the first actual observations through communicating with satellites in the satellite cluster 30, where each first actual observation includes an actual carrier-phase observation. It is assumed that there are N satellites in the satellite cluster 40, which are satellite 1, satellite 2, satellite 3, ..., and satellite N, respectively. In FIG. 5, the actual carrier-phase observation between the terminal 41 and the satellite 1 is carrier-phase observation 1, the actual carrier-phase observation between the terminal 41 and the satellite 2 is carrier-phase observation 2, the actual carrier-phase observation between the terminal 41 and the satellite 3 is carrier-phase observation 3, ..., and the actual carrier-phase observation between the terminal 41 and the satellite N is carrier-phase observation N. Therefore, the actual carrier-phase observations between the terminal 41 and the N satellites form a sequence 42 as shown in FIG. 5. Further, the computer device may obtain satellite ephemeris sent by the N satellites, respectively, and determine the real positions of the N satellites based on the satellite ephemeris. The real positions of the N satellites form a sequence 43 as shown in FIG. 5. That is, the real position of the satellite 1 is real position 1, the real position of the satellite 2 is real position 2, the real position of the satellite 3 is real position 3, ..., and the real position of the satellite N is real position N. Then, the computer device may determine the initially estimated position of the terminal based on the carrier-phase observations and the real positions of the satellites. Specifically, estimated position a of the terminal is determined according to carrier-phase observation 1 and real position 1, estimated position b of the terminal is determined according to carrier-phase observation 2 and real position 2, estimated position c of the terminal is determined according to carrier-phase observation 3 and real position 3, ..., and estimated position n of the terminal is determined according to carrier-phase observation N and real position N. Thereby, the estimated positions of the terminal form a sequence 44 as shown in FIG. 5. Further, the initially estimated position 45 of the terminal may be determined according to estimated position a, estimated position b, estimated position c, ..., and estimated position n. Thereby, the initially estimated position of the terminal is determined according to the actual carrier-phase observations between the terminal and the N satellites, so that efficiency and real-time performance of obtaining the initially estimated position of the terminal can be improved.

Determining estimated position i of the terminal according to carrier-phase observation i and real position i may be as follows. Estimated position i of the terminal may be determined through subtracting carrier-phase observation i from real position i, where i is a positive integer less than or equal to N. Determining the initially estimated position of the terminal according to estimated position a, estimated position b, estimated position c, ..., and estimated position n may be as follows. One estimated position may be randomly selected from estimated position a, estimated position b, the estimated positions c, ..., and estimated position n, as the initially estimated position of the terminal. Alternatively, an average position among estimated position a, estimated position b, estimated position c, ..., and estimated position n serves as the initially estimated position of the terminal. Alternatively, the computer device may obtain second differences between a second target estimated position and second remaining estimated positions, respectively, calculate a sum of the second differences, and determine the estimated position which has the smallest sum of the second differences as the initially estimated position of the terminal. The second target estimated position refers to each of estimated position a, estimated position b, estimated position c, ..., and estimated position n. The second remaining estimated positions refer to the estimated positions other than the second target estimated position among estimated position a, estimated position b, estimated position c, ..., and estimated position n.

Manner 3: Each first actual observation includes the foregoing actual carrier-phase observation and the foregoing actual pseudo-range observation. It is assumed that the terminal 31 in FIG. 4 and the terminal 41 in FIG. 5 are the same terminal. The computer device may obtain estimated position 1, estimated position 2, estimated position 3, ..., and estimated position N of the terminal according to the actual pseudo-range observations and the real positions of the satellites, and may obtain estimated position a, estimated position b, estimated position c, ..., and estimated position n of the terminal according to the actual carrier-phase observations and the real positions of the satellites. The computer device may determine the initially estimated position of the terminal according to estimated position 1, estimated position 2, estimated position 3, ..., estimated position N, estimated position a, estimated position b, estimated position c, ..., and estimated position n of the terminal. For example, one estimated position may be randomly selected from estimated position 1, estimated position 2, estimated position 3,..., estimated position N, estimated position a, estimated position b, estimated position c, ..., and estimated position n, as the initially estimated position of the terminal. Alternatively, an average position of estimated position 1, estimated position 2, estimated position 3, ..., estimated position N, estimated position a, estimated position b, estimated position c, ..., and estimated position n serves as the initially estimated position of the terminal. Alternatively, the computer device may obtain third differences between a third target estimated position and third remaining estimated positions, respectively, calculate a sum of the third differences, and determine the estimated position having the smallest sum of the third differences as the initially estimated position of the terminal. The third target estimated position refers to each of estimated position 1, estimated position 2, estimated position 3, ..., estimated position N, estimated position a, estimated position b, estimated position c, ..., and estimated position n. The third remaining estimated positions refer to estimated position other than the third target estimated position among estimated position 1, estimated position 2, estimated position 3, ..., estimated position N, estimated position a, estimated position b, estimated position c, ..., and estimated position n. Thereby, the initially estimated position of the terminal is determined according to the actual pseudo-range observations and the actual carrier-phase observations between the terminal and the N satellites, so that accuracy of the initially estimated position of the terminal can be improved.

S103. Determine a first systematic error of positioning, for the initially estimated position of the terminal, based on the second actual observations, the real position of the target base station, and the real positions of the N satellites.

Herein the computer device may determine a second systematic error of positioning for the target base station, based on the second actual observation, the real position of the target base station, and the real positions of the N satellites. There is temporal and spatial correlation between the second systematic error and the first systematic error. Hence, the first systematic error for the initially estimated position of the terminal may be determined based on the second systematic error.

In embodiments of the present disclosure including the embodiments of both the claims and the specification (hereinafter referred to as "all embodiments of the present disclosure"), determining the first systematic error of positioning, for the initially estimated position of the terminal, based on the second actual observations, the real position of the target base station, and the real positions of the N satellites may include: determining a second systematic error of positioning, for the target base station, based on the second actual observations, the real position of the target base station, and the real positions of the N satellites; and determining an interpolated value of the second systematic error to serve as the first systematic error based on the initially estimated position of the terminal, the real position of the target base station, and the real positions of the N satellites.

The computer device may determine the second systematic error, in positioning the target base station, based on the second actual observations, the real position of the target base station, and the real positions of the N satellites. The second systematic error of positioning is configured to reflect a systematic error generated during a process of positioning the terminal, which is located at the real position of the target base station, using the actual observations. Because the target base station is associated with the terminal, there is temporal and spatial correlation between the second systematic error for the target base station and the first systematic error for the initially estimated position of the terminal. Therefore, the computer device may interpolate a value of the second systematic error by using the initially estimated position of the terminal, the real position of the target base station, and the real positions of the N satellites, so as to obtain the first systematic error. The interpolation may be nearest-neighbor interpolation, quadratic interpolation, cubic interpolation, or the like. The first systematic error for the initially estimated position of the terminal is thereby obtained, so as to facilitate modifying the initially estimated position according to the first systematic error. Hence, a high-precision target position can be obtained, and accuracy of positioning the terminal is improved.

In all embodiments of the present disclosure, each second actual observation includes second actual observation $Q_i$ between the target base station and satellite $P_i$ among the N satellites, where i is a positive integer less than or equal to N. The computer device may obtain the second systematic error for the target base station through any one or a combination of the following three manners.

Manner 1: Second actual observation $Q_i$ between the target base station and satellite $P_i$ includes an actual pseudo-range observation. The computer device may determine a real distance between the real position of the target base station and a real position of the satellite $P_i$. The computer device may further determine a first difference between the actual pseudo-range observation and the real distance as a first candidate systematic error between the target base station and the satellite $P_i$. The computer device may further determine the second systematic error at the real position of the target base station to include the first candidate systematic error between the target base station and each of the N satellites. Thereby, the second systematic error for the target base station is determined based on the actual pseudo-range observations in the second actual observations, so that efficiency of obtaining the second systematic error can be improved.

For example, each second actual observation includes the actual pseudo-range observation, and the computer device may obtain the first candidate systematic error between the target base station and satellite $P_i$ on a basis of following observation equation (1).

$$\rho = R + C \cdot (dT_r - dT_s) + d_{trop} + d_{ion} + d_{orb} + m_1 + \varepsilon_1 \quad (1)$$

$\rho$ is the pseudo-range observation; R is a geometric distance from the real position of an observation site to the satellite (that is, the real distance); $dT_r$ and $dT_s$ indicate a clock difference of the observation site and a clock difference of the satellite, respectively; $d_{trop}$ $d_{ion}$, and $d_{orb}$ represent a tropospheric error, an ionospheric refraction error, and a GNSS satellite orbit error, respectively; and $m_1$ and $\varepsilon_1$ indicate a Doppler error and observation noise, respectively.

When the first candidate systematic error between the target base station and satellite $P_i$ needs to be calculated, the target base station serves as the observation site, and the real distance between the target base station and the satellite and the actual pseudo-range observation in the second actual observation are inputted into formula (1), so as to obtain the first difference between the actual pseudo-range observation and the real distance, that is, $\rho$ - R. The first difference is determined to serve as the first candidate systematic error between the target base station and satellite $P_i$.

Manner 2: Second actual observation $Q_i$ between the target base station and satellite $P_i$ includes an actual carrier-phase observation. The computer device may determine a real distance between the real position of the target base station and a real position of the satellite $P_i$. The computer device may further determine a second difference between the actual carrier-phase observation and the real distance as a first candidate systematic error between the target base station and the satellite $P_i$. The computer device may further determine the second systematic error at the real position of the target base station to include the first candidate systematic error between the target base station and each of the N satellites. Thereby, the second systematic error for the target base station is determined based on the actual carrier-phase observations in the second actual observations, so that efficiency of obtaining the second systematic error can be improved.

For example, each second actual observation includes the actual carrier-phase observation, and the computer device may obtain the first candidate systematic error between the target base station and satellite $P_i$ on a basis of following observation equation (2).

$$\varphi = R + N + C \cdot (dT_r - dT_s) + d_{trop} - d_{ion} + d_{orb} + m_2 + \varepsilon_2 \quad (2)$$

$\varphi$ is the carrier-phase observation; N is carrier phase ambiguity; C is the speed of light; $dT_r$ and $dT_s$ indicate a clock difference of the observation site and a clock difference of the satellite, respectively; $d_{trop}$ $d_{ion}$, and $d_{orb}$ represent a tropospheric error, an ionospheric refraction error, and a GNSS satellite orbit error, respectively; and $m_2$ and $\varepsilon_2$ indicate a Doppler error and observation noise, respectively.

When the first candidate systematic error between the target base station and satellite $P_i$ needs to be calculated, the target base station serves as the observation site, and the real distance between the target base station and the satellite and the actual carrier-phase observation in the second actual observation are inputted into formula (2), so as to obtain the second difference between the actual carrier-phase observation and the real distance, that is, $\varphi$ - R. The second difference is determined to serve as the first candidate systematic error between the target base station and satellite Pi.

Manner 3: Second actual observation Qi between the target base station and satellite Pi includes the actual pseudo-range observation and the actual carrier-phase observation. The computer device may determine a real distance between the real position of the target base station and a real position of satellite Pi. The computer device may obtain a first difference between the actual pseudo-range observation and the real distance, and a second difference between the actual carrier-phase observation and the real distance, and determine a first candidate systematic error between the target base station and satellite Pi based on the first difference and the second difference. The compute device may determine the second systematic error at the real position of the target base station to include the first candidate systematic error between the target base station and each of the N satellites. Thereby, the second systematic error for the target base station is determined based on the actual pseudo-range observations and the actual carrier-phase observations, which are in the second actual observations, so that efficiency of obtaining the second systematic error can be improved.

For example, each second actual observation includes the actual pseudo-range observation and the actual carrier-phase observation, and the computer device may determine the first candidate systematic error between the target base station and satellite Pi based on $\rho$ - R and $\varphi$ - R.

In all embodiments of the present disclosure, determining the interpolated value of the second systematic error to serve as the first systematic error based on the initially estimated position of the terminal, the real position of the target base station, and the real positions of the N satellites may include: deriving correlation functions of the second systematic error with respect to the real position of the target base station and the real positions of the N satellites; determining, for each positive integer i less than or equal to N, a second candidate systematic error between the terminal and the satellite Pi through a respective one of the correlation functions based on the initially estimated position of the terminal and the real position of the satellite Pi; and determining the first systematic error based on the second candidate systematic error between the terminal and each of the N satellites.

The computer device may fit the real position of the target base station, the real positions of the N satellites, and the second systematic error into correlation functions, which reflect a relationship between the real position of the target base station, the real positions of the N satellites, and the second systematic error. The correlation functions are configured to reflect correlation among the real position of the target base station, the real positions of the N satellites, and the second systematic error. The second systematic error for the target base station is correlated, both temporally and spatially, with the systematic error of the initially estimated position of the terminal. That is, correlation among the initially estimated position of the terminal, the real positions of the N satellites, and the systematic error of the initially estimated position is the same as or similar to correlation among the real position of the target base station, the real positions of the N satellites, and the second systematic error. Therefore, the second candidate systematic error between the terminal and satellite Pi may be determined through the respective correlation function based on the initially estimated position of the terminal and the real position of satellite Pi. In an embodiment, the real position of satellite Pi and the initially estimated position of the terminal are substituted into the correlation function, and then the correlation function is solved to obtain the second candidate systematic error between the terminal and satellite Pi. The second candidate systematic error between the terminal and each of the N satellites is determined to be included in the first systematic error of the initially estimated position of the terminal.

As an example, the second systematic error of positioning includes the first differences between the actual pseudo-range observations and the real distances. The computer device may fit the real position of the target base station, the real positions of the N satellites, and the first difference for each satellite into first correlation functions for the real position of the target base station, the real positions of the N satellites, and the first differences. The first correlation functions are configured to reflect the correlation between the real position of the target base station, the real positions of the N satellites, and the first differences. A first initial systematic error between the terminal and satellite Pi may be determined through the respective first correlation function based on the initially estimated position of the terminal and the real position of satellite Pi, and such first initial systematic error of positioning is determined to serve as the second candidate systematic error. In an embodiment, the real position of satellite Pi and the initially estimated position of the terminal are substituted into the first correlation function, and the first correlation function is solved to obtain the second candidate systematic error between the terminal and satellite Pi. The second candidate systematic error between the terminal and each of the N satellites is determined to be included in the first systematic error of the initially estimated position of the terminal. In other words, the first systematic error of positioning includes the first initial systematic error between the terminal and each satellite.

As another example, the second systematic error of positioning includes the second differences between the actual carrier-phase observations and the real distances. The computer device may fit the real position of the target base station, the real positions of the N satellites, and the second difference for each satellite into second correlation functions for the real position of the target base station, the real positions of the N satellites, and the second differences. The second correlation functions are configured to reflect the correlation between the real position of the target base station, the real positions of the N satellites, and the second differences. A first initial systematic error between the terminal and satellite Pi may be determined through the respective second correlation function based on the initially estimated position of the terminal and the real position of satellite Pi, and such first initial systematic error of positioning is determined to serve as the second candidate systematic error. In an embodiment, the real position of satellite Pi and the initially estimated position of the terminal are substituted into the second correlation function, and the second correlation function is solved to obtain the second candidate systematic error between the terminal and satellite Pi. The second candidate systematic error between the terminal and each of the N satellites is determined to be included in the first systematic error of the initially estimated position of the terminal. In other words, the first systematic error of positioning includes the first initial systematic error between the terminal and each satellite.

As another example, the second systematic error of positioning includes both the first differences between the actual pseudo-range observations and the real distances, and the second differences between the actual carrier-phase observations and the real distances. The computer device may determine both the foregoing first initial systematic error and the foregoing second initial systematic error to serve as the second candidate systematic error between the terminal and satellite Pi. The second candidate systematic error between the terminal and each of the N satellites is determined to be included in the first systematic error of the initially estimated position of the terminal. In other words, the first systematic error of positioning includes the first initial systematic error and the second initial systematic error between the terminal and each satellite.

S104. Modify the initially estimated position of the terminal according to the first systematic error and the first actual observations to obtain a target position of the terminal.

Accuracy of the initially estimated position of the terminal is relatively low. The computer device may modify the initially estimated position of the terminal based on the first systematic error of positioning and the first actual observations, so as to obtain the target position of the terminal. Thereby, the terminal can be position with improved accuracy and higher precision.

According to embodiments of the present disclosure, the first actual observations, the second actual observations, the real position of the target base station, and the real positions of the N satellites are obtained. The initially estimated position of the terminal is determined based on the first actual observations and the real positions of the N satellites. The initially estimated position of the terminal is a position determined without considering a systematic error during the positioning. That is, the initially estimated position of the terminal is somewhat inaccurate. Thereby, the computer device may determine the first systematic error for the initially estimated position based on the second actual observations, the real positions of the N satellites, and the real position of the target base station. The first systematic error is capable to reflect a degree of accuracy of the initially estimated position. Then, the initially estimated position of the terminal can be modified according to the first systematic error and the first actual observations, so as to obtain the target position of the terminal. Accordingly, the terminal can be more accurately positioned. The positioning can be implemented with high precision.

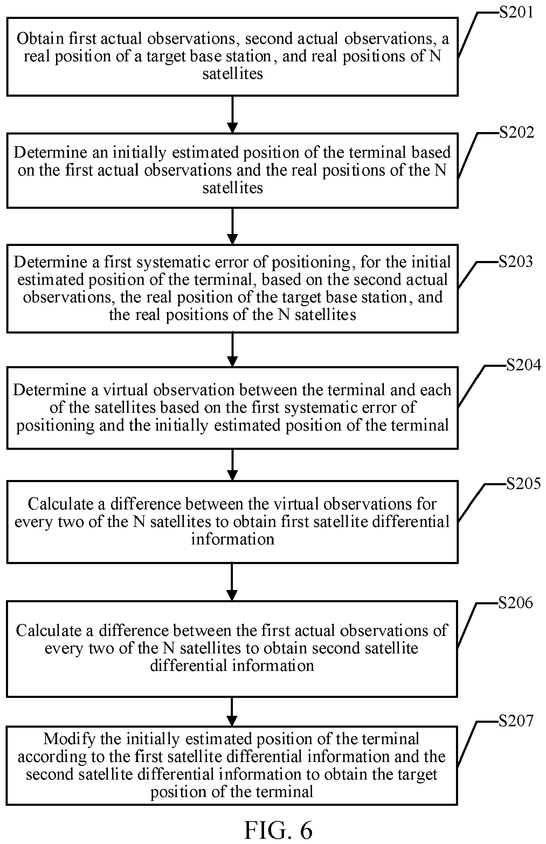

FIG. 6 is a schematic flowchart of a method for positioning according to an embodiment of the present disclosure. As shown in FIG. 6, the method is executable by the terminal as shown in FIG. 1, or executable by the server as shown in FIG. 1, or the method may be jointly performed by the terminal and the server in FIG. 1. Devices configured to perform the method in the present disclosure may be collectively referred to as a computer device. The method for positioning may include following steps S201 to S207:

S201. Obtain first actual observations, second actual observations, a real position of a target base station, and real positions of N satellites, where the first actual observations are observations generated through a terminal communicating with the N satellites, respectively, the second actual observations are generated through the target base station communicating with the N satellites, respectively, the terminal is associated with the target base station, and N is an integer greater than 1.

S202. Determine an initially estimated position of the terminal based on the first actual observations and the real positions of the N satellites.

S203. Determine a first systematic error of positioning, for the initially estimated position of the terminal, based on the second actual observations, the real position of the target base station, and the real positions of the N satellites.

S204. Determine a virtual observation between the terminal and each of the satellites based on the first systematic error of positioning and the initially estimated position of the terminal.

Herein the computer device may determine the virtual observation between the terminal and each satellite based on the first systematic error of positioning and the initially estimated position of the terminal. The virtual observation is not an observation obtained through the terminal communicating with the respective satellite, but is an observation calculated based on the first systematic error and the initially estimated position of the terminal.

As an example, for each integer i, the first systematic error includes the first initial systematic error between the terminal and the satellite Pi. The computer device may determine the terminal as an observation site, and determine a distance between the initially estimated position of the terminal and the real position of satellite Pi as the real distance between the terminal and satellite Pi. Then, the real distance between the terminal and satellite Pi and the respective first initial systematic error are substituted into the foregoing equation (1) to obtain the virtual pseudo-range observation. That is, a sum of the real distance between the terminal and satellite Pi and the respective first initial systematic error is determined to serve as a virtual pseudo-range observation. The virtual pseudo-range observation is determined to serve as the virtual observation between the terminal and satellite Pi.

As another example, for each integer i, the first systematic error includes the second initial systematic error between the terminal and the satellite Pi. The computer device may determine the terminal as an observation site, and determine a distance between the initially estimated position of the terminal and the real position of satellite Pi as the real distance between the terminal and satellite Pi. Then, the real distance between the terminal and satellite Pi and the respective second initial systematic error are substituted into the foregoing equation (2) to obtain the virtual carrier-phase observation. That is, a sum of the real distance between the terminal and satellite Pi and the respective second initial systematic error is determined to serve as a virtual carrier-phase observation. The virtual carrier-phase observation is determined to serve as the virtual observation between the terminal and satellite Pi.

As another example, for each integer i, the first systematic error includes both the first initial systematic error the second initial systematic error between the terminal and the satellite Pi. The virtual pseudo-range observation between the terminal and satellite Pi is determined based on the real distance and the respective first initial systematic error. The virtual carrier-phase observation between the terminal and satellite Pi is determined based on the real distance and the respective second initial systematic error. Both the virtual pseudo-range observation and the virtual carrier-phase observation are determined to serve as the virtual observation between the terminal and satellite Pi.

S205. Calculate a difference between the virtual observations for every two of the N satellites to obtain first satellite differential information.

In all embodiments of the present disclosure, for each pair of positive integers i and j, both of which less than or equal to N, the virtual observation between the terminal and a satellite Pi among the N satellites may comprise a first virtual pseudo-range observation, and the virtual observation between the terminal and a satellite Pj among the N satellites comprises a second virtual pseudo-range observation. i is not equal to j. The computer device may determine the terminal as an observation site. The computer device may establish the foregoing equation (1) for the first virtual pseudo-range observation, so as obtain a first theoretical pseudo-range equation expressing the first virtual pseudo-range observation. The computer device may further establish the foregoing equation (1) for the second virtual pseudo-range observation, so as to obtain a second theoretical pseudo-range equation expressing the second virtual pseudo-range observation. Then, a piece of the first satellite differential information between the virtual observation of satellite Pi and the virtual observation of satellite Pj is determined through calculating a difference between the first theoretical pseudo-range equation and the second theoretical pseudo-range equation. That is, the first satellite differential information comprises a first-order differential pseudo-range observation equation. Such differential processing on the virtual pseudo-range observations is capable to compensate a systematic error of positioning at the initially estimated position of the terminal, and thereby improves precision in positioning the terminal.

As an example, the difference between the first theoretical pseudo-range equation and the second theoretical pseudo-range equation is calculated to obtain the first-order differential pseudo-range observation equation. Such first-order differential pseudo-range observation equation is determined to serve as the piece of the first satellite differential information between the virtual observation of satellite Pi and the virtual observation of satellite Pj. For example, the first-order differential pseudo-range observation equation may be expressed as following equation (3).

$$\Delta\rho = \Delta R + C \cdot \Delta dT_s + \Delta d_{trop} + \Delta d_{ion} + \Delta d_{orb} + \Delta m_1 + \Delta \varepsilon_1 \quad (3)$$

$$\Delta(*) = (*)_i - (*)_j \ ,$$

which indicates a first-order differential operation. $\Delta\rho$ represents a difference between the virtual pseudo-range observation with respect to satellite Pi and the virtual pseudo-range observation with respect to satellite Pi. $\Delta R$ represents a difference between the real distance, which is between the real position of the terminal and the real position of satellite Pi, and the real distance, which is between the real position of the terminal and the real position of satellite Pj. Comparing equation (3) with equation (1), it is appreciated that the term concerning the clock difference of the terminal is eliminated, and other errors such as an ionospheric error and a tropospheric refraction error are both weakened.

In all embodiments of the present disclosure, for each pair of positive integers i and j, both of which less than or equal to N, the virtual observation between the terminal and a satellite Pi among the N satellites may comprise a first virtual carrier-phase observation, and the virtual observation between the terminal and a satellite Pj among the N satellites comprises a second virtual carrier-phase observation. i is not equal to j. The computer device may determine the terminal as an observation site. The computer device may establish the foregoing equation (2) for the first virtual carrier-phase observation, so as obtain a first theoretical carrier-phase equation expressing the first virtual carrier-phase observation. The computer device may further establish the foregoing equation (2) for the second virtual carrier-phase observation, so as to obtain a second theoretical carrier-phase equation expressing the second virtual carrier-phase observation.

Then, a piece of the first satellite differential information between the virtual observation of satellite Pi and the virtual observation of satellite Pj is determined through calculating a difference between the first theoretical carrier-phase equation and the second theoretical carrier-phase equation. That is, the first satellite differential information comprises a first-order differential carrier-phase observation equation. Such differential processing on the virtual carrier-phase observations is capable to compensate a systematic error of positioning at the initially estimated position of the terminal, and thereby improves precision in positioning the terminal.

As an example, the difference between the first theoretical carrier-phase equation and the second theoretical carrier-phase equation is calculated to obtain the first-order differential carrier-phase observation equation. Such first-order differential carrier-phase observation equation is determined to serve as the piece of the first satellite differential information between the virtual observation of satellite Pi and the virtual observation of satellite Pj. For example, the first-order differential carrier-phase observation equation may be expressed as following equation (4).

$$\Delta \varphi = \Delta R + \Delta N + C \cdot \Delta dT_s + \Delta d_{trop} - \Delta d_{ion} + \Delta d_{orb} + \Delta m_2 + \Delta \varepsilon_2 \quad (4)$$

$$\Delta(*) = (*)_i - (*)_j$$

, which indicates a first-order differential operation. $\Delta \varphi$ is a difference between the virtual carrier-phase observation with respect to satellite Pi and the virtual carrier-phase observation with respect to satellite Pj. Comparing equation (4) with equation (2) , it is appreciated that the term concerning the clock difference of the terminal is eliminated, and other errors such as an ionospheric error and a tropospheric refraction error are both weakened.

In all embodiments of the present disclosure, for each pair of positive integers i and j, both of which less than or equal to N, the virtual observation between the terminal and a satellite Pi among the N satellites may comprise a first virtual pseudo-range observation and a first virtual carrier-phase observation, and the virtual observation between the terminal and a satellite Pj among the N satellites comprises a second virtual pseudo-range observation and a second virtual carrier-phase observation. i is not equal to j. The computer device may determine the terminal as an observation site. The computer device may establish the foregoing equation (1) for the first virtual pseudo-range observation, so as obtain a first theoretical pseudo-range equation expressing the first virtual pseudo-range observation. The computer device may further establish the foregoing equation (1) for the second virtual pseudo-range observation, so as to obtain a second theoretical pseudo-range equation expressing the second virtual pseudo-range observation. The computer device may establish the foregoing equation (2) for the first virtual carrier-phase observation, so as obtain a first theoretical carrier-phase equation expressing the first virtual carrier-phase observation. The computer device may further establish the foregoing equation (2) for the second virtual carrier-phase observation, so as to obtain a second theoretical carrier-phase equation expressing the second virtual carrier-phase observation. Then, a piece of the first satellite differential information between the virtual observation of satellite Pi and the virtual observation of satellite Pj is determined based on the first theoretical pseudo-range equation, the second theoretical pseudo-range equation, the first theoretical carrier-phase equation, and the second theoretical carrier-phase equation.

As an example, the difference between the first theoretical pseudo-range equation and the second theoretical pseudo-range equation is calculated to obtain the first-order differential pseudo-range observation equation, and the difference between the first theoretical carrier-phase equation and the second theoretical carrier-phase equation is calculated to obtain the first-order differential carrier-phase observation equation. Such first-order differential pseudo-range observation equation and such first-order differential carrier-phase observation equation is determined to serve as the piece of the first satellite differential information between the virtual observation of satellite Pi and the virtual observation of satellite Pj. That is, the foregoing equations (3) and (4) serve as the piece of the first satellite differential information. The first satellite differential information includes both the first-order differential pseudo-range observation equation(s) and the first-order differential carrier-phase observation equation(s). Such differential processing on the virtual pseudo-range observations and the virtual carrier-phase observations is capable to compensate a systematic error of positioning at the initially estimated position of the terminal, and thereby improves precision in positioning the terminal.

S206. Calculate a difference between the first actual observations of every two of the N satellites to obtain second satellite differential information.

Herein the computer device may calculate the difference between the first actual observations of every two satellites, so as to obtain the second satellite differential information for the first actual observations. Thereby, the systematic error of positioning at the initially estimated position of the terminal is compensated, which further improves precision in positioning the terminal.

In all embodiments of the present disclosure, the computer device may obtain the second satellite differential information between the first actual observations of every two satellites in any one or any combination of following three manners.

Manner 1: For each pair of positive integers i and j, the first actual observation between the terminal and a satellite Pi among the N satellites comprises a first actual pseudo-range observation, and the first actual observation between the terminal and a satellite Pj among the N satellites comprises a second actual pseudo-range observation. The computer device may determine the terminal to serve as an observation site. The computer device may establish the foregoing equation (1) for the first actual pseudo-range observation, so as to obtain a first theoretical pseudo-range observation equation expressing the first actual pseudo-range observation. The computer device may establish the foregoing equation (1) for the second actual pseudo-range observation, so as to obtain a second theoretical pseudo-range observation equation expressing the second actual pseudo-range observation. Then, a piece of the second satellite differential information between the actual observation with respect to satellite Pi and the actual observation with respect satellite Pj is determined through calculating a difference between the first theoretical pseudo-range observation equation and the second theoretical pseudo-range observation equation. Such differential processing on the actual pseudo-range observations is capable to compensate a systematic error of positioning at the initially estimated position of the terminal, and thereby improves precision in positioning the terminal.

As an example, the difference between the first theoretical pseudo-range equation and the second theoretical pseudo-range equation is calculated to obtain a first-order differential pseudo-range observation equation. Such first-order differential pseudo-range observation equation is determined to serve as the piece of the second satellite differential information between the first actual observation of satellite Pi and the first actual observation of satellite Pj. That is, the second satellite differential information includes the first-order differential pseudo-range observation equation.

Manner 2: For each pair of positive integers i and j, the first actual observation between the terminal and a satellite Pi among the N satellites comprises a first actual carrier-phase observation, and the first actual observation between the terminal and a satellite Pj among the N satellites comprises a second actual carrier-phase observation. The computer device may determine the terminal to serve as an observation site. The computer device may establish the foregoing equation (1) for the first actual carrier-phase observation, so as to obtain a first theoretical carrier-phase observation equation expressing the first actual carrier-phase observation. The computer device may establish the foregoing equation (1) for the second actual carrier-phase observation, so as to obtain a second theoretical carrier-phase observation equation expressing the second actual carrier-phase observation. Then, a piece of the second satellite differential information between the actual observation with respect to satellite Pi and the actual observation with respect satellite Pj is determined through calculating a difference between the first theoretical carrier-phase observation equation and the second theoretical carrier-phase observation equation. Such differential processing on the actual carrier-phase observations is capable to compensate a systematic error of positioning at the initially estimated position of the terminal, and thereby improves precision in positioning the terminal.

As an example, the difference between the first theoretical carrier-phase equation and the second theoretical carrier-phase equation is calculated to obtain a first-order differential carrier-phase observation equation. Such first-order differential carrier-phase observation equation is determined to serve as the piece of the second satellite differential information between the first actual observation of satellite Pi and the first actual observation of satellite Pj. That is, the second satellite differential information includes the first-order differential carrier-phase observation equation.

Manner 3: for each pair of positive integers i and j, both of which less than or equal to N, the first actual observation between the terminal and a satellite Pi among the N satellites comprises a first actual pseudo-range observation and a first actual carrier-phase observation, and the first actual observation between the terminal and a satellite Pj among the N satellites comprises a second actual pseudo-range observation and a second actual carrier-phase observation. i is not equal to j. The computer device may determine the terminal as an observation site. The computer device may establish the foregoing equation (1) for the first actual pseudo-range observation, so as obtain a first theoretical pseudo-range equation expressing the first actual pseudo-range observation. The computer device may further establish the foregoing equation (1) for the second actual pseudo-range observation, so as to obtain a second theoretical pseudo-range equation expressing the second actual pseudo-range observation. The computer device may establish the foregoing equation (2) for the first actual carrier-phase observation, so as obtain a first theoretical carrier-phase equation expressing the first actual carrier-phase observation. The computer device may further establish the foregoing equation (2) for the second actual carrier-phase observation, so as to obtain a second theoretical carrier-phase equation expressing the second actual carrier-phase observation. Then, a piece of the second satellite differential information between the first actual observation of satellite Pi and the first actual observation of satellite Pj is determined based on the first theoretical pseudo-range equation, the second theoretical pseudo-range equation, the first theoretical carrier-phase equation, and the second theoretical carrier-phase equation.

As an example, the difference between the first theoretical pseudo-range equation and the second theoretical pseudo-range equation is calculated to obtain the first-order differential pseudo-range observation equation, and the difference between the first theoretical carrier-phase equation and the second theoretical carrier-phase equation is calculated to obtain the first-order differential carrier-phase observation equation. Such first-order differential pseudo-range observation equation and such first-order differential carrier-phase observation equation is determined to serve as the piece of the second satellite differential information between the first actual observation of satellite Pi and the first actual observation of satellite Pj. That is, the second satellite differential information includes both the first-order differential pseudo-range observation equation(s) and the first-order differential carrier-phase observation equation(s). Such differential processing on the actual pseudo-range observations and the actual carrier-phase observations is capable to compensate a systematic error of positioning at the initially estimated position of the terminal, and thereby improves precision in positioning the terminal.

S207. Modify the initially estimated position of the terminal according to the first satellite differential information and the second satellite differential information to obtain the target position of the terminal.

Herein the computer device may modify the initially estimated position of the terminal based on the first satellite differential information and the second satellite differential information, so as to obtain the target position of the terminal. The target position may be a highly precise location of the terminal. For example, the target position may be precise in a centimeter level or a decimeter level. In all embodiments of the present disclosure, the target position may be determined to serve as an actual/real position of the terminal. Accordingly, the terminal can be more accurately positioned. The positioning can be implemented with high precision.

In all embodiments of the present disclosure, modifying the initially estimated position of the terminal according to the first satellite differential information and the second satellite differential information to obtain the target position of the terminal may include: calculating a difference between the first satellite differential information and the second satellite differential information to obtain third satellite differential information; determining a positional offset based on the third satellite differential information; and modifying the initially estimated position of the terminal by the positional offset to obtain the target position of the terminal.

The computer device may calculate a difference between the first satellite differential information and the second satellite differential information, so as to obtain the third satellite differential information. That is, the third satellite differential information is a second-order differential observation equation. The computer device may solve the second-order differential observation equation to obtain the positional offset corresponding to the terminal, and modify the initially estimated position of the terminal by the positional offset, so as to obtain the target position of the terminal. Such multi-differential processing on the first actual observations and the virtual observations is capable to compensate a systematic error of positioning at the initially estimated position of the terminal, and thereby improves accuracy and precision in positioning the terminal.

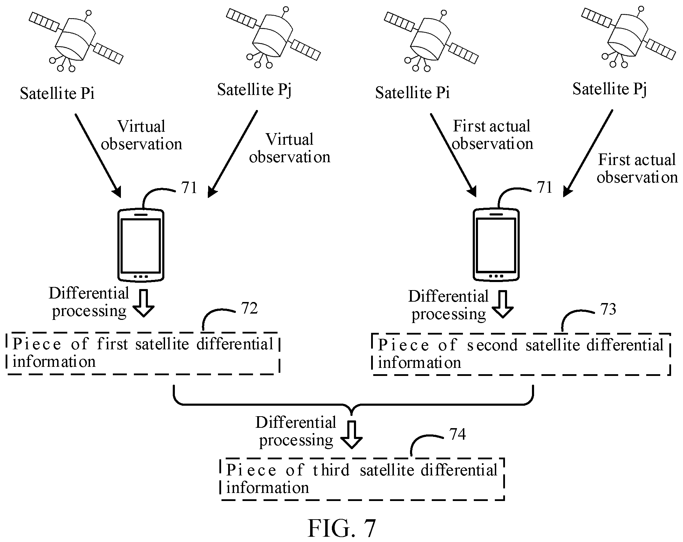

An example may be as shown in FIG. 7. A terminal 71 may be an arbitrary terminal in the terminal cluster 13 as shown in FIG. 1, satellite Pi and satellite Pj may be arbitrary satellites in the satellite cluster 10 as shown in FIG. 1, and satellite Pi and satellite Pj are different satellites. The computer device may calculate a difference between the virtual observation, which is obtained between satellite Pi and the terminal 71, and another virtual observation, which is obtained between satellite Pj and the terminal 71, so as to obtain a piece 72 of the first satellite differential information. The computer device may calculate a difference between the first actual observation, which is obtained between satellite Pi and the terminal 71, and the first actual observation, which is obtained between satellite Pj and the terminal 71, so as to obtain a piece 73 of the second satellite differential information. Then, a difference between the piece 72 of the first satellite differential information and the piece 73 of the second satellite differential information is calculated obtain a piece 74 of the third satellite differential information. Such multi-differential processing on the first actual observations and the virtual observations is capable to compensate a systematic error of positioning at the initially estimated position of the terminal, and thereby improves accuracy and precision in positioning the terminal.

In all embodiments of the present disclosure, the computer device may obtain the third satellite differential information through any one or any combination of following three manners.

Manner 1: Each piece of the first satellite differential information includes the first-order differential pseudo-range observation equation for the virtual pseudo-range observations, and each piece of the second satellite differential information includes the first-order differential pseudo-range observation equation for the actual pseudo-range observations. A difference between the two first-order differential pseudo-range observation equations is calculated to obtain a second-order differential pseudo-range observation equation, and the second-order differential pseudo-range observation equation is determined to serve as the corresponding piece of the third satellite differential information. In such case, the computer device may establish a set of second-order differential observation equations which is formed by the second-order differential pseudo-range observation equations among the N satellites, and solve the set of second-order differential observation equations to obtain the positional offset of the terminal.

As an example, the second-order differential pseudo-range observation equation for satellite Pi and satellite Pj may be derived as the following equation (5).

$$\nabla \Delta \rho = \nabla \Delta R + \nabla \Delta d_{trop} + \nabla \Delta d_{ion} + \nabla \Delta d_{orb} + \nabla \Delta m_1 + \nabla \Delta \varepsilon_1 \quad (5)$$

$$\nabla\Delta(*) = \Delta(*)_i - \Delta(*)_j \ ,$$

which indicates a second-order differential operation. For example, $\nabla\Delta\rho$ indicates a difference between $\Delta\rho1$ and $\Delta\rho2$, $\Delta\rho1$ indicates a difference between the virtual pseudo-range observation with respect to satellite Pi and the virtual pseudo-range observation with respect to satellite Pj, and $\Delta\rho2$ indicates a difference between the actual pseudo-range observation with respect to satellite Pi and the actual pseudo-range observation with respect to satellite Pj. Comparing equation (5) with equation (3), it is appreciated that a term including the clock difference of the satellite is eliminated, and other errors such as an ionospheric error and a tropospheric refraction error are further weakened.

Manner 2: Each piece of the first satellite differential information includes the first-order differential carrier-phase observation equation for the virtual carrier-phase observations, and each piece of the second satellite differential information includes the first-order differential carrier-phase observation equation for the actual carrier-phase observations. A difference between the two first-order differential carrier-phase observation equations is calculated to obtain a second-order differential carrier-phase observation equation, and the second-order differential carrier-phase observation equation is determined to serve as the corresponding piece of the third satellite differential information. In such case, the computer device may establish a set of second-order differential observation equations which is formed by the second-order differential carrier-phase observation equations among the N satellites, and solve the set of second-order differential observation equations to obtain the positional offset of the terminal.

As an example, the second-order differential pseudo-range observation equation for satellite Pi and satellite Pj may be derived as the following equation (6).

$$\nabla\Delta\varphi = \nabla\Delta R + \nabla\Delta N + \nabla\Delta d_{trop} - \nabla\Delta d_{ion} + \nabla\Delta d_{orb} + \nabla\Delta m_2 + \nabla\Delta\varepsilon_2 \ \ (6)$$

$$\nabla\Delta(*) = \Delta(*)_i - \Delta(*)_j \ ,$$

which indicates a second-order differential operation. For example, $\nabla\Delta\rho$ indicates a difference between $\Delta\varphi1$ and $\Delta\varphi2$, $\Delta\varphi1$ indicates a difference between the virtual carrier-phase observation with respect to satellite Pi and the virtual carrier-phase observation with respect to satellite Pj, and $\Delta\varphi2$ indicates a difference between the actual carrier-phase observation with respect to satellite Pi and the actual carrier-phase observation with respect to satellite Pj. Comparing equation (6) with equation (4), it is appreciated that a term including the clock difference of the satellite is eliminated, and other errors such as an ionospheric error and a tropospheric refraction error are further weakened.

Manner 3: Each piece of the first satellite differential information includes the first-order differential pseudo-range observation equation for the virtual pseudo-range observations and the first-order differential carrier-phase observation equation for the virtual carrier-phase observations, and each piece of the second satellite differential information includes the first-order differential pseudo-range observation equation for the actual pseudo-range observations and the first-order differential carrier-phase observation equation for the actual carrier-phase observations. The computer device may calculate a difference between the two first-order differential pseudo-range observation equations to obtain a second-order differential pseudo-range observation equation, and calculate a difference between the two first-order differential carrier-phase observation equations to obtain a second-order differential carrier-phase observation equation. The second-order differential pseudo-range observation equation and the second-order differential carrier-phase observation equation are determined to serve as the corresponding piece of the third satellite differential information. In such case, the computer device may establish a set of second-order differential observation equations which is formed by the second-order differential pseudo-range observation equations and the second-order differential carrier-phase observation equations among the N satellites, and solve the set of second-order differential observation equations to obtain the positional offset of the terminal.

According to embodiments of the present disclosure, the first actual observations, the second actual observations, the real position of the target base station, and the real positions of the N satellites are obtained. The initially estimated position of the terminal is determined based on the first actual observations and the real positions of the N satellites. The initially estimated position of the terminal is a position determined without considering a systematic error during the positioning. That is, the initially estimated position of the terminal is somewhat inaccurate. Thereby, the computer device may determining the virtual observation between the terminal and each of the satellites based on the first systematic error of positioning and the initially estimated position of the terminal, calculate the difference between the virtual observations for every two of the N satellites to obtain the first satellite differential information, calculate the difference between the first actual observations of every two of the N satellites to obtain the second satellite differential information, and modify the initially estimated position of the terminal according to the first satellite differential information and the second satellite differential information to obtain the target position of the terminal. That is, the virtual observations and the first actual observations are subject to the differential processing, which facilitates compensating the systematic error of positioning in determining the initially estimated position of the terminal. Accordingly, the terminal can be more accurately positioned. The positioning can be implemented with high precision.

After the computer device obtains the target position of the terminal, the target position of the terminal may be used in scenarios such as determining a road condition status, route planning, road design, traffic light setting, danger warning, accident judgment, vehicle detection, and location service.

For example, the target position of the terminal is three-dimensional coordinates of the terminal in a world coordinate system. The computer device may perform coordinate transformation on the three-dimensional coordinates of the terminal in the world coordinate system according to a mapping relationship between the world coordinate system and a map coordinate system, to obtain two-dimensional coordinates of the terminal in the map coordinate system, and send the two-dimensional coordinates of the terminal in the map coordinate system to the terminal. The terminal marks the two-dimensional coordinates on an electronic map, so that a user can view a real-time high-precision location of the terminal.

As another example, the computer device may determine, according to the target position of the terminal, road condition information of a target road on which the terminal is located, where the road condition information of the target road includes a smooth state, a congested state, and the like. Further, a status change time of a signal light on the target road side is determined according to the road condition information of the target road, and the status of the signal light on the target road side is changed based on the status change time, which helps relieve a congested state of the target road. For example, the computer device detects that severe congestion occurs in the east to west direction, but there are few vehicles in the south to north direction. Through further analysis, this is because of congestion at a road crossing in the west. In this case, the following measures may be taken. On the one hand, green light duration in the east to west direction is prolonged; and on the other hand, the signal light in the direction from the east road crossing to the west road crossing is adjusted to be green until congestion disappears or all directions are traffic balanced.

As another example, the computer device may determine, according to the target position of the terminal, a neighboring terminal that has a neighboring relationship with the terminal; and obtain first vehicle attribute information of a vehicle corresponding to the terminal and second vehicle attribute information of a vehicle corresponding to a neighboring terminal. The vehicle attribute information herein includes a vehicle type, a size of a vehicle, and the like, and the vehicle type includes an ambulance, a police vehicle, a bus, and the like. Further, a first identifier of the vehicle corresponding to the terminal is determined according to the first vehicle attribute information, and a second identifier of the vehicle corresponding to the neighboring terminal is determined according to the second vehicle attribute information. The identifier is used for marking different types of vehicles, and identifiers corresponding to vehicles of different vehicle types have different colors or shapes. For example, a blue identifier is used for representing an ordinary vehicle, and a red identifier is used for representing a special vehicle such as an ambulance or a police car. Alternatively, a round identifier is used for representing a small vehicle, and a rectangle is used for representing a large vehicle. Then, the first identifier may be added to the electronic map according to the target position of the terminal, and the second identifier may be added, according to the location of the neighboring terminal, to the electronic map that includes the first identifier, so as to obtain an updated electronic map. In this way, when the vehicle encounters an emergency, the vehicle allows a special vehicle to pass in time, thereby improving traffic flexibility and convenience.

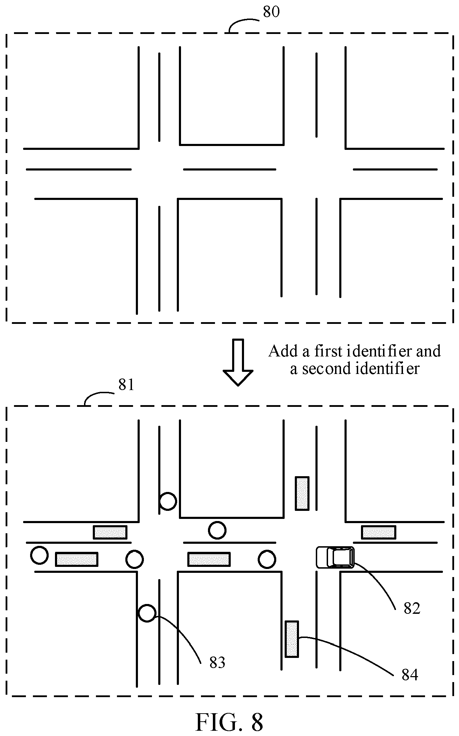

For example, as shown in FIG. 8, it is assumed that a vehicle corresponding to the terminal is a small vehicle, a neighboring terminal that has a neighboring relationship with the terminal may be a terminal whose distance from the terminal is less than a distance threshold, the distance threshold may be 10 m, 20 m, or the like, and vehicles corresponding to the neighboring terminal include a small vehicle and a large vehicle. It is assumed that an electronic map of a region in which the terminal is located is an electronic map 80 in FIG. 8, and the electronic map 80 includes two crossroad-type roads. The computer device may use a vehicle identifier 82 (namely, the first identifier) to represent the vehicle corresponding to the terminal, use a rectangular identifier 84 to represent the large vehicle corresponding to the neighboring terminal, and use a circular identifier 83 to represent the small vehicle corresponding to the neighboring terminal.

In all embodiments of the present disclosure, when the user corresponding to the terminal performs zooming processing on the updated electronic map, the computer device may respond to a zooming processing request for updating the electronic map, obtain the updated electronic map obtained after the zooming processing, and separately perform zooming processing on the first identifier and the second identifier according to the updated electronic map obtained after the zooming processing. For example, after zoom-out processing is performed on the updated electronic map, the updated electronic map on which zoom-out processing has been performed may be obtained, and zoom-out processing is performed on the first identifier and the second identifier according to a scale of the updated electronic map on which zoom-out processing has been performed.

Further, because the computer device can obtain a high-precision location of the terminal and a high-precision location of the neighboring terminal, the computer device may remind and warn the vehicle corresponding to the terminal of a potential risk. For example, a traffic accident occurs in an inner lane in the east to west direction. The computer device may send a warning to a vehicle passing in the east to west direction in advance, and may further remind and penalize a vehicle that illegally occupies a bus lane and an emergency lane, and when a traffic accident occurs, a driving track of the vehicle related to the accident may be invoked for accident identification and settlement of insurance claim. Alternatively, the computer device may further assist in searching for a stolen or lost vehicle, to help ensure vehicle safety.

In all embodiments of the present disclosure, to improve confidentiality of the target position corresponding to the terminal, the computer device may encrypt the target position of the terminal and user information corresponding to the terminal, to obtain encrypted data, and may store the encrypted data in a blockchain. The encrypted data can be queried in the blockchain only in a special case. If a traffic accident occurs, a traffic management department may invoke a track of the vehicle related to the accident for responsibility identification and claim adjustment. An electronic map of a terminal corresponding to an ordinary user can display only a location of the ordinary user and a location and a speed of another user around the location of the ordinary user in real time, but does not show specific personal information of a specific user. On a high-precision map, one point is used for representing a vehicle corresponding to one user, and a moving speed of the point is used for representing a speed of the vehicle. In this way, not only a current traffic status is easily understood, but also personal privacy leakage is avoided. With permission of a user, a driving track query and download service that is limited to the user may also be provided.

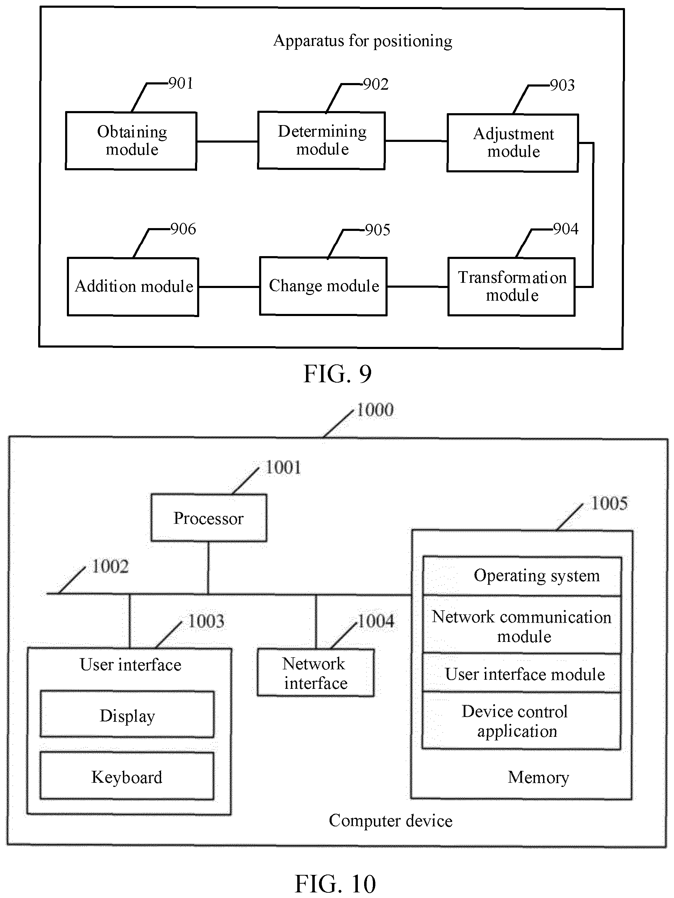

FIG. 9 is a schematic structural diagram of an apparatus for positioning according to an embodiment of the present disclosure. The apparatus for positioning may be a computer program (including program codes) running in a computer device. For example, the apparatus for positioning is application software. The apparatus may be configured to perform corresponding steps in the method provided in the embodiment of the present disclosure. As shown in FIG. 9, the apparatus for positioning may include: an obtaining module 901, a determining module 902, an adjustment module 903, a transformation module 904, a change module 905, and an addition module 906.

The obtaining module is configured to obtain first actual observations, second actual observations, a real position of a target base station, and real positions of N satellites, where the first actual observations are observations generated through a terminal communicating with the N satellites, respectively, the second actual observations are generated through the target base station communicating with the N satellites, respectively, the terminal is associated with the target base station, and N is an integer greater than 1.

The determining module is configured to: determine an initially estimated position of the terminal based on the first actual observations and the real positions of the N satellites; and determine a first systematic error of positioning, for the initially estimated position of the terminal, based on the second actual observations, the real position of the target base station, and the real positions of the N satellites.

The adjustment module is configured to modify the initially estimated position of the terminal according to the first systematic error and the first actual observations to obtain a target position of the terminal.

In all embodiments of the present disclosure, the determining module determining the first systematic error of positioning, for the initially estimated position of the terminal, based on the second actual observations, the real position of the target base station, and the real positions of the N satellites may include: determining a second systematic error of positioning, for the target base station, based on the second actual observations, the real position of the target base station, and the real positions of the N satellites; and determining an interpolated value of the second systematic error to serve as the first systematic error based on the initially estimated position of the terminal, the real position of the target base station, and the real positions of the N satellites.

In all embodiments of the present disclosure, for each positive integer i less than or equal to N, the second actual observations may comprise a second actual observation Qi generated through the target base station communicating with a satellite Pi among the N satellites.

The determining module determining the second systematic error of positioning, for the target base station, based on the second actual observations, the real position of the target base station, and the real positions of the N satellites may include: for each positive integer i less than or equal to N, determining a real distance between the real position of the target base station and the real position of satellite Pi, and determining a difference between the second actual observation Qi and the real distance to serve as a first candidate systematic error between the target base station and satellite Pi; and determining the second systematic error to comprise the first candidate systematic error between the target base station and each of the N satellites.

In all embodiments of the present disclosure, the determining module determining the interpolated value of the second systematic error to serve as the first systematic error based on the initially estimated position of the terminal, the real position of the target base station, and the real positions of the N satellites may include: deriving correlation functions of the second systematic error with respect to the real position of the target base station and the real positions of the N satellites; determining, for each positive integer i less than or equal to N, a second candidate systematic error between the terminal and satellite Pi through a respective one of the correlation functions based on the initially estimated position of the terminal and the real position of satellite Pi; and determining the first systematic error based on the second candidate systematic error between the terminal and each of the N satellites.

In all embodiments of the present disclosure, the adjustment module modifying the initially estimated position of the terminal according to the first systematic error and the first actual observations to obtain the target position of the terminal may include: determining a virtual observation between the terminal and each of the satellites based on the first systematic error of positioning and the initially estimated position of the terminal; calculating a difference between the virtual observations for every two of the N satellites to obtain first satellite differential information; calculating a difference between the first actual observations of every two of the N satellites to obtain second satellite differential information; and modifying the initially estimated position of the terminal according to the first satellite differential information and the second satellite differential information to obtain the target position of the terminal.

In all embodiments of the present disclosure, for each pair of positive integers i and j, both of which less than or equal to N, the virtual observation between the terminal and a satellite Pi among the N satellites may comprise a first virtual pseudo-range observation and a first virtual carrier-phase observation, and the virtual observation between the terminal and a satellite Pj among the N satellites comprises a second virtual pseudo-range observation and a second virtual carrier-phase observation.

The adjustment module calculating the difference between the virtual observations for every two of the N satellites to obtain first satellite differential information may include: determining a first theoretical pseudo-range equation of the first virtual pseudo-range observation, and determining a second theoretical pseudo-range equation of the second virtual pseudo-range observation; determining a first theoretical carrier-phase equation of the first virtual carrier-phase observation, and determining a second theoretical carrier-phase equation of the second virtual carrier-phase observation; and determining a piece of the first satellite differential information, between the virtual observations for satellite Pi and satellite Pj, according to the first theoretical pseudo-range equation, the second theoretical pseudo-range equation, the first theoretical carrier-phase equation, and the second theoretical carrier-phase equation.

In all embodiments of the present disclosure, the adjustment module determining the piece of the second satellite differential information, between the first actual observations for satellite Pi and satellite Pj, according to the first theoretical pseudo-range equation, the second theoretical pseudo-range equation, the first theoretical carrier-phase equation, and the second theoretical carrier-phase equation may include: determining a differential equation between the first theoretical pseudo-range equation and the second theoretical pseudo-range equation to obtain a first-order differential pseudo-range observation equation; determining a differential equation between the first theoretical carrier-phase equation and the second theoretical carrier-phase equation to obtain a first-order differential carrier-phase observation equation; and determining the piece of the second satellite differential information, between the first actual observations for satellite Pi and satellite Pj to include the first-order differential pseudo-range observation equation and the first-order differential carrier-phase observation equation.

In all embodiments of the present disclosure, for each pair of positive integers i and j, both of which less than or equal to N, the first actual observation between the terminal and a satellite Pi among the N satellites may comprise a first actual pseudo-range observation and a first actual carrier-phase observation, and the first actual observation between the terminal and a satellite Pj among the N satellites comprises a second actual pseudo-range observation and a second actual carrier-phase observation.

The adjustment module calculating the difference between the first actual observations for every two of the N satellites to obtain second satellite differential information includes: determining a first theoretical pseudo-range equation of the first actual pseudo-range observation, and determining a second theoretical pseudo-range equation of the second actual pseudo-range observation; determining a first theoretical carrier-phase equation of the first actual carrier-phase observation, and determining a second theoretical carrier-phase equation of the second actual carrier-phase observation; and determining a piece of the second satellite differential information, between the first actual observations for satellite Pi and satellite Pj, according to the first theoretical pseudo-range equation, the second theoretical pseudo-range equation, the first theoretical carrier-phase equation, and the second theoretical carrier-phase equation.

In all embodiments of the present disclosure, the adjustment module determining the piece of the second satellite differential information, between the first actual observations for satellite Pi and satellite Pj, according to the first theoretical pseudo-range equation, the second theoretical pseudo-range equation, the first theoretical carrier-phase equation, and the second theoretical carrier-phase equation comprises may include: determining a differential equation between the first theoretical pseudo-range equation and the second theoretical pseudo-range equation to obtain a first-order differential pseudo-range observation equation; determining a differential equation between the first theoretical carrier-phase equation and the second theoretical carrier-phase equation to obtain a first-order differential carrier-phase observation equation; and determining the piece of the second satellite differential information, between the first actual observations for satellite Pi and satellite Pj to include the first-order differential pseudo-range observation equation and the first-order differential carrier-phase observation equation.

In all embodiments of the present disclosure, the adjustment module modifying the initially estimated position of the terminal according to the first satellite differential information and the second satellite differential information to obtain the target position of the terminal may include: calculating a difference between the first satellite differential information and the second satellite differential information to obtain third satellite differential information; determining a positional offset based on the third satellite differential information; and modifying the initially estimated position of the terminal by the positional offset to obtain the target position of the terminal.

In all embodiments of the present disclosure, the adjustment module calculating the difference between the first satellite differential information and the second satellite differential information to obtain third satellite differential information may include: determining a differential equation between a first-order differential pseudo-range observation equation in the first satellite differential information and a corresponding first-order differential pseudo-range observation equation in the second satellite differential information to obtain a second-order differential pseudo-range observation equation; determining a differential equation between a first-order differential carrier-phase observation equation in the first satellite differential information and a corresponding first-order carrier-phase observation equation in the second satellite differential information to obtain a second-order differential carrier-phase observation equation; and determining the third satellite differential information to include the second-order differential pseudo-range observation equation and the second-order differential carrier-phase observation equation.

In all embodiments of the present disclosure, the target position of the terminal may be three-dimensional coordinates of the terminal in a world coordinate system. The transformation module may be configured to transform three-dimensional coordinates of the terminal in the world coordinate system to obtain two-dimensional coordinates of the terminal in a map coordinate system; and transmit the two-dimensional coordinates of the terminal in the map coordinate system to the terminal to enable the terminal to mark the two-dimensional coordinates in an electronic map.

In all embodiments of the present disclosure, the change module may be configured to determine a road condition of a target road, on which the terminal is located, according to the target position of the terminal; determine a time, at which a status of a signal light for the target road is changed, according to the road condition of the target road; and change a displayed status of the signal light at the time.

In all embodiments of the present disclosure, the addition module may be configured to: determine a neighboring terminal in adjacency of the terminal according to the target position of the terminal; obtain an attribute of a first vehicle on which the terminal is locate and an attribute of a second vehicle on which the neighboring terminal is located; determine a first identifier of the first vehicle according to the attribute of the first vehicle; determine a second identifier of the second vehicle according to the attribute of the second vehicle; and add the first identifier onto an electronic map according to the target position of the terminal, and add the second identifier onto the electronic map with the added first identifier according to a position of the neighboring terminal, to obtain update the electronic map.

In all embodiments of the present disclosure, the addition module may be configured to: zoom the updated electronic map in response to a zooming request; and zoom the first identifier and the second identifier according to the zoomed and updated electronic map.

According to an embodiment of the present disclosure, the steps in the method for positioning shown in FIG. 3 may be performed by the modules in the apparatus for positioning shown in FIG. 9. For example, step S101 shown in FIG. 3 may be performed by the obtaining module 901 in FIG. 9, and step S102 and step S103 shown in FIG. 3 may be performed by the determining module 902 in FIG. 9. Step S 104 shown in FIG. 3 may be performed by the adjustment module 903 in FIG. 9.

According to an embodiment of the present disclosure, the modules in the apparatus for positioning shown in FIG. 9 may be separately or completely combined into one or more units, or one (some) of the units may be further divided into at least two functionally smaller subunits, so that the same operation can be implemented without affecting implementation of a technical effect of this embodiment of the present disclosure. The foregoing modules are divided based on logical functions. In actual application, a function of one module may be implemented by at least two units, or a function of at least two modules is implemented by one unit. In another embodiment of the present disclosure, the apparatus for positioning may alternatively include other units. In actual application, these functions may be implemented with the assistance of other units, and may be cooperatively implemented by at least two units.

According to an embodiment of the present disclosure, the data processing apparatus shown in FIG. 9 may be constructed by running a computer program (including program code) capable of performing steps related to the corresponding methods shown in FIG. 3 and FIG. 6 on a general-purpose computer device including a processing element such as a central processing unit (CPU), a random access storage medium (RAM), a read-only storage medium (ROM), and a storage element, for example, a computer, to implement the data processing method in the embodiment of the present disclosure. The computer program may be recorded in, for example, a computer readable recording medium, and may be loaded into the foregoing computing device by using the computer readable recording medium, and run in the computing device.

According to embodiments of the present disclosure, the first actual observations, the second actual observations, the real position of the target base station, and the real positions of the N satellites are obtained. The initially estimated position of the terminal is determined based on the first actual observations and the real positions of the N satellites. The initially estimated position of the terminal is a position determined without considering a systematic error during the positioning. That is, the initially estimated position of the terminal is somewhat inaccurate. Thereby, the computer device may determine the first systematic error for the initially estimated position based on the second actual observations, the real positions of the N satellites, and the real position of the target base station. The first systematic error is capable to reflect a degree of accuracy of the initially estimated position. Then, the initially estimated position of the terminal can be modified according to the first systematic error and the first actual observations, so as to obtain the target position of the terminal. Accordingly, the terminal can be more accurately positioned. The positioning can be implemented with high precision.

Referring to FIG. 10, FIG. 10 is a schematic structural diagram of a computer device according to an embodiment of the present disclosure. As shown in FIG. 10, a computer device 1000 may include: a processor 1001, a network interface 1004, and a memory 1005. In addition, the foregoing computer device 1000 may further include: a user interface 1003 and at least one communication bus 1002. The communication bus 1002 is configured to implement connection and communication between these components. The user interface 1003 may include a display and a keyboard. Optionally, the user interface 1003 may further include a standard wired interface and wireless interface. The network interface 1004 may optionally include a standard wired interface and wireless interface (for example, a Wi-Fi interface). The memory 1005 may be a high-speed random access memory (RAM), or may be a non-volatile memory, for example, at least one magnetic disk storage. Optionally, the memory 1005 may include at least one storage apparatus that is remotely disposed relative to the processor 1001. As shown in FIG. 10, the memory 1005 used as a computer readable storage medium may include an operating system, a network communication module, a user interface module, and a device-control application program.

In the computer device 1000 shown in FIG. 10, the network interface 1004 may provide a network communication function. The user interface 1003 is mainly configured to provide an input interface. The processor 1001 may be configured to invoke a device-control application program stored in the memory 1005, to implement the method for positioning provided in the embodiments of the present disclosure.

It is to be understood that the computer device 1000 described in this embodiment of the present disclosure may perform descriptions of the method for positioning in FIG. 3 and the embodiment corresponding to FIG. 6, or may perform descriptions of the apparatus for positioning in the embodiment corresponding to FIG. 9. Details are not described herein again. In addition, the description of beneficial effects of the same method are not described herein again.

In addition, an embodiment of the present disclosure further provides a computer readable storage medium. The computer readable storage medium stores a computer program executed by the apparatus for positioning mentioned above, and the computer program includes program instructions. When executing the program instructions, the processor can perform the descriptions of the method for positioning in the embodiments corresponding to FIG. 3 and FIG. 6. Therefore, details are not described herein again. In addition, the description of beneficial effects of the same method is not described herein again. For technical details that are not disclosed in the computer readable storage medium embodiments of the present disclosure, refer to the descriptions of the method embodiments of the present disclosure.

For example, the program instructions may be deployed on one computer device for execution, or may be deployed on at least two computer devices at one location for execution, or may be executed on at least two computer devices distributed in at least two locations and interconnected by using a communication network. The at least two computer devices distributed in the at least two locations and interconnected by using the communication network may form a blockchain network.

The computer readable storage medium may be an internal storage unit of the apparatus for positioning or the computer device provided in any one of the foregoing embodiments, for example, a hard disk or an internal memory of the computer device. The computer readable storage medium may also be an external storage device of the computer device, for example, a plug type hard disk, a smart media card (SMC), a secure digital (SD) card, and a flash card that are configured on the computer device. Further, the computer readable storage medium may further include an internal storage unit of the computer device and an external storage device. The computer readable storage medium is configured to store the computer program and other programs and data required by the computer device. The computer readable storage medium may be further configured to temporarily store data that has been or is to be output.

The terms "first" and "second" in the specification, claims, and accompanying drawings of the embodiments of the present disclosure are used for distinguishing between different media content, and are not used for describing a specific sequence. In addition, the term "include" and any variant thereof are intended to cover a non-exclusive inclusion. For example, a process, method, apparatus, product, or device that includes a series of steps or units is not limited to the listed steps or modules; and instead, further optionally includes a step or module that is not listed, or further optionally includes another step or unit that is intrinsic to the process, method, apparatus, product, or device.

An embodiment of the present disclosure further provides a computer program product, including computer program/instructions. When the computer program/instructions are executed by a processor, the foregoing method for positioning described in the embodiments corresponding to FIG. 3 and FIG. 6 is implemented. Therefore, details are not described herein again. In addition, the description of beneficial effects of the same method is not described herein again. For technical details related to the computer program product embodiment in the present disclosure, refer to the description in the method embodiment of the present disclosure.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are executed in a mode of hardware or software depends on particular applications and design constraint conditions of the technical solutions. Those skilled in the art may use different methods to implement the described functions for each particular application, but such implementation is not to be considered beyond the scope of the present disclosure.

The method and the related apparatus provided in the embodiments of the present disclosure are described with reference to a flowchart and/or a schematic structural diagram of the method provided in the embodiments of the present disclosure. Specifically, each process and/or block of the method flowchart and/or the schematic structural diagram of the method may be implemented by a computer program instruction, and a combination of the process and/or block in the flowchart and/or block diagram. These computer program instructions may be provided to a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the schematic structural diagram. These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the schematic structural diagram. These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the schematic structural diagram.

What is disclosed above is merely exemplary embodiments of the present disclosure, and certainly is not intended to limit the scope of the claims of the present disclosure. Therefore, equivalent variations made in accordance with the claims of the present disclosure shall fall within the scope of the present disclosure.

**Claims**

1.   A method for positioning, executable by a computer device, wherein the method comprises:

   obtaining first actual observations, second actual observations, a real position of a target base station, and real positions of N satellites, wherein the first actual observations are observations generated through a terminal communicating with the N satellites, respectively, the second actual observations are generated through the target base station communicating with the N satellites, respectively, the terminal is associated with the target base station, and N is an integer greater than 1;
   determining an initially estimated position of the terminal based on the first actual observations and the real positions of the N satellites;
   determining a first systematic error of positioning, for the initially estimated position of the terminal, based on the second actual observations, the real position of the target base station, and the real positions of the N satellites; and
   modifying the initially estimated position of the terminal according to the first systematic error and the first actual observations to obtain a target position of the terminal.

2.   The method according to claim 1, wherein determining the first systematic error of positioning, for the initially estimated position of the terminal, based on the second actual observations, the real position of the target base station, and the real positions of the N satellites comprises:

   determining a second systematic error of positioning, for the target base station, based on the second actual observations, the real position of the target base station, and the real positions of the N satellites; and
   determining an interpolated value of the second systematic error to serve as the first systematic error based on the initially estimated position of the terminal, the real position of the target base station, and the real positions of the N satellites.

3.   The method according to claim 2, wherein:

   for each positive integer i less than or equal to N, the second actual observations comprises a second actual observation Qi generated through the target base station communicating with a satellite Pi among the N satellites; and

determining the second systematic error of positioning, for the target base station, based on the second actual observations, the real position of the target base station, and the real positions of the N satellites comprises:

for each positive integer i less than or equal to N,

determining a real distance between the real position of the target base station and the real position of the satellite Pi; and
determining a difference between the second actual observation Qi and the real distance to serve as a first candidate systematic error between the target base station and

the satellite Pi; and
determining the second systematic error to comprise the first candidate systematic error between the target base station and each of the N satellites.

4. The method according to claim 3, wherein determining the interpolated value of the second systematic error to serve as the first systematic error based on the initially estimated position of the terminal, the real position of the target base station, and the real positions of the N satellites comprises:

deriving correlation functions of the second systematic error with respect to the real position of the target base station and the real positions of the N satellites;
determining, for each positive integer i less than or equal to N, a second candidate systematic error between the terminal and the satellite Pi through a respective one of the correlation functions based on the initially estimated position of the terminal and the real position of the satellite Pi; and
determining the first systematic error based on the second candidate systematic error between the terminal and each of the N satellites.

5. The method according to claim 1, wherein modifying the initially estimated position of the terminal according to the first systematic error and the first actual observations to obtain the target position of the terminal comprises:

determining a virtual observation between the terminal and each of the satellites based on the first systematic error of positioning and the initially estimated position of the terminal;
calculating a difference between the virtual observations for every two of the N satellites to obtain first satellite differential information;
calculating a difference between the first actual observations of every two of the N satellites to obtain second satellite differential information; and
modifying the initially estimated position of the terminal according to the first satellite differential information and the second satellite differential information to obtain the target position of the terminal.

6. The method according to claim 5, wherein for each pair of positive integers i and j, both of which less than or equal to N:

the virtual observation between the terminal and a satellite Pi among the N satellites comprises a first virtual pseudo-range observation and a first virtual carrier-phase observation, and the virtual observation between the terminal and a satellite Pj among the N satellites comprises a second virtual pseudo-range observation and a second virtual carrier-phase observation; and
calculating the difference between the virtual observations for every two of the N satellites to obtain first satellite differential information comprises:

determining a first theoretical pseudo-range equation of the first virtual pseudo-range observation, and determining a second theoretical pseudo-range equation of the second virtual pseudo-range observation;
determining a first theoretical carrier-phase equation of the first virtual carrier-phase observation, and determining a second theoretical carrier-phase equation of the second virtual carrier-phase observation; and
determining a piece of the first satellite differential information, between the virtual observations for the satellite Pi and the satellite Pj, according to the first theoretical pseudo-range equation, the second theoretical pseudo-range equation, the first theoretical carrier-phase equation, and the second theoretical carrier-phase equation.

7. The method according to claim 6, wherein determining the piece of the first satellite differential information, between the virtual observations for the satellite Pi and the satellite Pj, according to the first theoretical pseudo-range equation, the second theoretical pseudo-range equation, the first theoretical carrier-phase equation, and the second theoretical carrier-phase equation comprises:

determining a differential equation between the first theoretical pseudo-range equation and the second theoretical pseudo-range equation to obtain a first-order differential pseudo-range observation equation;
determining a differential equation between the first theoretical carrier-phase equation and the second theoretical carrier-phase equation to obtain a first-order differential carrier-phase observation equation; and
determining the piece of the first satellite differential information, between the virtual observations for the satellite Pi and the satellite Pj to comprise the first-order differential pseudo-range observation equation and the first-order differential carrier-phase observation equation.

8. The method according to claim 5, wherein for each pair of positive integers i and j, both of which less than or equal to N:

the first actual observation between the terminal and a satellite Pi among the N satellites comprises a first actual pseudo-range observation and a first actual carrier-phase observation, and the first actual observation between the terminal and a satellite Pj among the N satellites comprises a second actual pseudo-range observation and a second actual carrier-phase observation; and
calculating the difference between the first actual observations for every two of the N satellites to obtain second satellite differential information comprises:

determining a first theoretical pseudo-range equation of the first actual pseudo-range observation, and determining a second theoretical pseudo-range equation of the second actual pseudo-range observation;
determining a first theoretical carrier-phase equation of the first actual carrier-phase observation, and determining a second theoretical carrier-phase equation of the second actual carrier-phase observation; and
determining a piece of the second satellite differential information, between the first actual observations for the satellite Pi and the satellite Pj, according to the first theoretical pseudo-range equation, the second theoretical pseudo-range equation, the first theoretical carrier-phase equation, and the second theoretical carrier-phase equation.

9. The method according to claim 8, wherein determining the piece of the second satellite differential information, between the first actual observations for the satellite Pi and the satellite Pj, according to the first theoretical pseudo-range equation, the second theoretical pseudo-range equation, the first theoretical carrier-phase equation, and the second theoretical carrier-phase equation comprises:

determining a differential equation between the first theoretical pseudo-range equation and the second theoretical pseudo-range equation to obtain a first-order differential pseudo-range observation equation;
determining a differential equation between the first theoretical carrier-phase equation and the second theoretical carrier-phase equation to obtain a first-order differential carrier-phase observation equation; and
determining the piece of the second satellite differential information, between the first actual observations for the satellite Pi and the satellite Pj to include the first-order differential pseudo-range observation equation and the first-order differential carrier-phase observation equation.

10. The method according to claim 5, wherein modifying the initially estimated position of the terminal according to the first satellite differential information and the second satellite differential information to obtain the target position of the terminal comprises:

calculating a difference between the first satellite differential information and the second satellite differential information to obtain third satellite differential information;
determining a positional offset based on the third satellite differential information; and
modifying the initially estimated position of the terminal by the positional offset to obtain the target position of the terminal.

11. The method according to claim 10, wherein calculating the difference between the first satellite differential information and the second satellite differential information to obtain third satellite differential information comprises:

determining a differential equation between a first-order differential pseudo-range observation equation in the first satellite differential information and a corresponding first-order differential pseudo-range observation equation in the second satellite differential information to obtain a second-order differential pseudo-range observation equation;

determining a differential equation between a first-order differential carrier-phase observation equation in the first satellite differential information and a corresponding first-order carrier-phase observation equation in the second satellite differential information to obtain a second-order differential carrier-phase observation equation; and

determining the third satellite differential information to comprise the second-order differential pseudo-range observation equation and the second-order differential carrier-phase observation equation.

12. An apparatus for positioning, comprising:

an obtaining module, configured to obtain first actual observations, second actual observations, a real position of a target base station, and real positions of N satellites, wherein the first actual observations are observations generated through a terminal communicating with the N satellites, respectively, the second actual observations are generated through the target base station communicating with the N satellites, respectively, the terminal is associated with the target base station, and N is an integer greater than 1;

a determining module, configured to:

determine an initially estimated position of the terminal based on the first actual observations and the real positions of the N satellites, and

determine a first systematic error of positioning, for the initially estimated position of the terminal, based on the second actual observations, the real position of the target base station, and the real positions of the N satellites; and

an adjustment module, configured to modify the initially estimated position of the terminal according to the first systematic error and the first actual observations to obtain a target position of the terminal.

13. A computer device, comprising: a processor and a memory,

the processor being connected to the memory,
the memory being configured to store program code, and
the processor being configured to invoke the program code to perform the method according to any one of claims 1 to 11.

14. A computer readable storage medium, storing a computer program,

the computer program comprising program instructions, and
when being executed by a processor, the program instructions enabling the processor to perform the method according to any one of claims 1 to 11.

15. A computer program product, comprising a computer program or computer instructions, which are configured to be executed by a processor to implement the method according to any one of claims 1 to 11.

FIG. 1

FIG. 2

Obtain first actual observations, second actual observations, a real position of a target base station, and real positions of N satellites — S101

Determine an initially estimated position of the terminal based on the first actual observations and the real positions of the N satellites — S102

Determine a first systematic error of positioning, for the initial estimated position of the terminal, based on the second actual observations, the real position of the target base station, and the real positions of the N satellites — S103

Modify the initially estimated position of the terminal according to the first systematic error and the first actual observations to obtain a target position of the terminal — S104

FIG. 3

31 First actual observations between a terminal and satellites

30

Satellite 1    Satellite 2

Satellite 3

Satellite 1    Satellite 2    Satellite 3    32

First actual observations { Pseudo-range observation 1    Pseudo-range observation 2    Pseudo-range observation 3    ...

Satellite navigation ephemeris

+    33

Real positions of satellites { Real position 1    Real position 2    Real position 3    ...

⇓    34

35

Estimated position of terminal { Estimated position 1    Estimated position 2    Estimated position 3    ...    ⇨    Initially estimated position of terminal

FIG. 4

41 First actual observations between a terminal and satellites

40

Satellite 1    Satellite 2

Satellite 3

Satellite 1    Satellite 2    Satellite 3    42

First actual observations { Carrier-phase observation 1    Carrier-phase observation 2    Carrier-phase observation 3    ...

Satellite navigation ephemeris

+    43

Real positions of satellites { Real position 1    Real position 2    Real position 3    ...

⇓    44

45

Estimated position of terminal { Estimated location a    Estimated location b    Estimated location c    ...    ⇨    Initially estimated position of terminal

FIG. 5

Obtain first actual observations, second actual observations, a real position of a target base station, and real positions of N satellites ⟋—S201

Determine an initially estimated position of the terminal based on the first actual observations and the real positions of the N satellites ⟋—S202

Determine a first systematic error of positioning, for the initial estimated position of the terminal, based on the second actual observations, the real position of the target base station, and the real positions of the N satellites ⟋—S203

Determine a virtual observation between the terminal and each of the satellites based on the first systematic error of positioning and the initially estimated position of the terminal ⟋—S204

Calculate a difference between the virtual observations for every two of the N satellites to obtain first satellite differential information ⟋—S205

Calculate a difference between the first actual observations of every two of the N satellites to obtain second satellite differential information ⟋—S206

Modify the initially estimated position of the terminal according to the first satellite differential information and the second satellite differential information to obtain the target position of the terminal ⟋—S207

FIG. 6

Satellite Pi          Satellite Pj          Satellite Pi          Satellite Pj

Virtual observation    Virtual observation    First actual observation    First actual observation

71    71

Differential processing    72    Differential processing    73

|Piece of first satellite differential|
|information|

┌Piece of second satellite differential┐
|information|

Differential processing    74

|Piece of third satellite differential|
|information|

FIG. 7

80

Add a first identifier and
a second identifier

81

82

83

84

FIG. 8

Apparatus for positioning

Obtaining module —901

Determining module —902

Adjustment module —903

Addition module —906

Change module —905

Transformation module —904

FIG. 9

1000

Processor —1001

—1002

User interface —1003

Display

Keyboard

Network interface —1004

—1005

Operating system

Network communication module

User interface module

Device control application

Memory

Computer device

FIG. 10

## INTERNATIONAL SEARCH REPORT

| International application No. |
|---|
| **PCT/CN2022/132455** |

**A.   CLASSIFICATION OF SUBJECT MATTER**

G01S 19/42(2010.01)i;  G01S 19/43(2010.01)i

According to International Patent Classification (IPC) or to both national classification and IPC

**B.   FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNPAT, CNKI, WPI, EPODOC: 终端 or 手机 or 电话 or 车 or 手表 or 腕, 实际 or 真实 or 准确 or 精确, 基站 or 基准站 or 参考站, 两个 or 三个 or 多个 or 不同 or 两颗 or 三颗 or 多颗, 卫星, 载波 or 本振, 相位, 伪距, 定位 or 位置 or 坐标 or 距离 or 观测, 偏移 or 偏差 or 差值 or 误差, 修正 or 补偿 or 调整 or 调校 or 校正 or 纠正 or 纠偏, 北斗, GPS or GLONASS or GNSS or GB, base w station?, observ+, distance or coordinate? or position? or location?, multi+ or several, satellite?, offset? or error?, correct+ or compensa+ or adjust+ or calibrat+, virtual+, differential, pseudo, interpolat+

**C.   DOCUMENTS CONSIDERED TO BE RELEVANT**

| Category* | Citation of document, with indication, where appropriate, of the relevant passages | Relevant to claim No. |
|---|---|---|
| X | CN 108333613 A (TRAFFIC CONTROL TECHNOLOGY CO., LTD.) 27 July 2018 (2018-07-27) description, paragraphs [0012]-[0057], and figure 1 | 1-4, 12-15 |
| X | CN 107643533 A (POWERVISION ROBOT INC.) 30 January 2018 (2018-01-30) description, paragraphs [0028]-[0063], and figures 1-5 | 1-4, 12-15 |
| A | CN 110208835 A (HARBIN ENGINEERING UNIVERSITY) 06 September 2019 (2019-09-06) entire document | 1-15 |
| A | CN 110895343 A (TENCENT TECHNOLOGY SHENZHEN CO., LTD.) 20 March 2020 (2020-03-20) entire document | 1-15 |
| A | CN 111998849 A (XIANGTAN UNIVERSITY) 27 November 2020 (2020-11-27) entire document | 1-15 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 January 2023** | **28 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| | International application No. |
|---|---|
| | **PCT/CN2022/132455** |

**C.    DOCUMENTS CONSIDERED TO BE RELEVANT**

| Category* | Citation of document, with indication, where appropriate, of the relevant passages | Relevant to claim No. |
|---|---|---|
| A | CN 113075714 A (CHINA MOBILE (SHANGHAI) INFORMATION COMMUNICATION TECHNOLOGY CO., LTD. et al.) 06 July 2021 (2021-07-06) entire document | 1-15 |
| A | JP 6637214 B1 (ALES CORP. et al.) 29 January 2020 (2020-01-29) entire document | 1-15 |
| A | WO 2015049044 A1 (AUDI A.G.) 09 April 2015 (2015-04-09) entire document | 1-15 |

Form PCT/ISA/210 (second sheet) (January 2015)

**INTERNATIONAL SEARCH REPORT**
Information on patent family members

International application No.

**PCT/CN2022/132455**

| Patent document cited in search report | | | Publication date (day/month/year) | Patent family member(s) | | | Publication date (day/month/year) |
|---|---|---|---|---|---|---|---|
| CN | 108333613 | A | 27 July 2018 | None | | | |
| CN | 107643533 | A | 30 January 2018 | None | | | |
| CN | 110208835 | A | 06 September 2019 | None | | | |
| CN | 110895343 | A | 20 March 2020 | HK | 40022041 | A0 | 13 November 2020 |
| CN | 111998849 | A | 27 November 2020 | None | | | |
| CN | 113075714 | A | 06 July 2021 | CN | 113075714 | B | 21 December 2021 |
| | | | | WO | 2022100388 | A1 | 19 May 2022 |
| JP | 6637214 | B1 | 29 January 2020 | JP | 2021047054 | A | 25 March 2021 |
| WO | 2015049044 | A1 | 09 April 2015 | DE | 102013016435 | A1 | 02 April 2015 |
| | | | | EP | 3052963 | A1 | 10 August 2016 |
| | | | | DE | 102013016435 | B4 | 24 December 2015 |
| | | | | EP | 3052963 | B1 | 22 July 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022101757795